(19) Europäisches Patentamt
European Patent Office
Office européen des brevets

(11) EP 1 584 710 B1

(12) **EUROPEAN PATENT SPECIFICATION**

(45) Date of publication and mention of the grant of the patent:
**20.05.2009 Bulletin 2009/21**

(21) Application number: **03768251.5**

(22) Date of filing: **25.12.2003**

(51) Int Cl.:
***D01F 6/62*** *(2006.01)* ***C08G 63/87*** *(2006.01)*

(86) International application number:
**PCT/JP2003/016766**

(87) International publication number:
**WO 2004/063436 (29.07.2004 Gazette 2004/31)**

(54) **POLYESTER FIBERS HAVING DEFORMED SECTION**

POLYESTERFASERN MIT VERFORMTEM PROFIL

FIBRES DE POLYESTER AYANT UNE SECTION DEFORMEE

(84) Designated Contracting States:
**AT BE BG CH CY CZ DE DK EE ES FI FR GB GR HU IE IT LI LU MC NL PT RO SE SI SK TR**

(30) Priority:
**14.01.2003 JP 2003005561**
**17.01.2003 JP 2003009942**
**21.01.2003 JP 2003012389**
**22.01.2003 JP 2003013305**
**12.03.2003 JP 2003066409**
**12.03.2003 JP 2003066403**
**12.03.2003 JP 2003066410**

(43) Date of publication of application:
**12.10.2005 Bulletin 2005/41**

(73) Proprietor: **Teijin Fibers Limited**
**Osaka-shi, Osaka 541-0054 (JP)**

(72) Inventors:
- **MASUDA, Tsuyoshi, c/o Teijin Fibers Limited Matsuyama-shi, Ehime 791-8041 (JP)**
- **KAMIYAMA, Mie, c/o Teijin Fibers Limited Matsuyama-shi, Ehime 791-8041 (JP)**
- **MIZUMURA, Tomoo, c/o Teijin Fibers Limited Matsuyama-shi, Ehime 791-8041 (JP)**
- **MIYASAKA, Nobuyoshi, c/o Teijin Fibers Limited Osaka-shi, Osaka 541-0054 (JP)**
- **TSUKAMOTO, Ryoji, c/o Teijin Fibers Limited Matsuyama-shi, Ehime 791-8041 (JP)**
- **HATTORI, Keijiro, c/o Teijin Limited Tokyo 100-0011 (JP)**
- **NAKAJIMA, Suguru, c/o Teijin Fibers Limited Matsuyama-shi, Ehime 791-8041 (JP)**
- **KIKUCHI, Katsushi, c/o Teijin Fibers Limited Matsuyama-shi, Ehime 791-8041 (JP)**
- **OSAKA, Hiroyuki, c/o Teijin Fibers Limited Matsuyama-shi, Ehime 791-8041 (JP)**

(74) Representative: **Hallybone, Huw George et al**
**Carpmaels & Ransford**
**43-45 Bloomsbury Square**
**London WC1A 2RA (GB)**

(56) References cited:
**EP-A1- 0 758 027** **EP-A1- 1 156 070**
**EP-A1- 1 209 260** **JP-A- 9 111 539**
**JP-A- 10 025 633** **JP-A- 10 096 119**
**JP-A- 54 043 295** **JP-A- 54 045 397**
**JP-A- 63 012 737** **JP-A- 2000 319 370**
**JP-A- 2001 278 971** **JP-A- 2003 160 655**
**JP-A- 2003 160 656** **JP-A- 2003 293 222**
**US-A- 4 254 018**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 584 710 B1

## Description

### Technical Field

The present invention relates to modified cross-section polyester fibers. More specifically, it relates to modified cross-section polyester fibers produced using a polyester polymer with satisfactory color tone and excellent moldability.

### Background Art

Polyester polymers, and particularly polyethylene terephthalate, polyethylene naphthalate, polytrimethylene terephthalate and polytetramethylene terephthalate, exhibit excellent mechanical, physical and chemical performance and are therefore widely used for fibers, films and other molded products

Such polyester polymers, for example polyethylene terephthalate, are usually produced by first preparing an ethylene glycol ester of terephthalic acid and/or a lower polymer thereof and then heating it under reduced pressure in the presence of a polymerization catalyst for reaction to the desired degree of polymerization. Other polyesters are produced by similar processes.

It is known that the type of polycondensation catalyst used has a major effect on the quality of the resulting polyester, and antimony compounds are most widely used as polycondensation catalysts for polyethylene terephthalate.

A problem is associated with the use of antimony compounds, however, because prolonged continuous melt spinning of polyesters results in accumulated adhesion of foreign matter around the spinneret hole (hereinafter referred to simply as "spinneret adhesion" and redirection of the molten polymer flow (bending), which ultimately lead to fluff and yarn breakage or mottling of the physical properties of filaments during the spinning and drawing steps.

Particularly when it is attempted to produce filaments with modified lateral cross-sections by melt spinning, the complex shape of the spinneret hole means that foreign matter on the spinneret has a greater influence on the discharge state of the molten polymer, while problems such as fluff and yarn breakage also occur during spinning.

As means of solving these problems, there have been disclosed the use of the reaction products of titanium compounds and trimellitic acid as polyester production catalysts (for example, see Japanese Examined Patent Publication SHO No. 59-46258) and the use of the reaction products of titanium compounds and phosphorous acid esters as polyester production catalysts (for example, see Japanese Unexamined Patent Publication SHO No. 58-38722). While these methods do enhance the molten heat stability of polyesters to some degree, the enhancing effect is inadequate and the obtained polyester polymers are in need of color tone improvement.

There have also been proposed titanium compound/phosphorus compound complexes as polyester production catalysts (for example, see Japanese Unexamined Patent Publication HEI No. 7-138354). However, although this method enhances the molten heat stability to some degree, the effect is inadequate and the obtained polyesters are in need of color tone improvement.

### Disclosure of the Invention

It is a first object of the invention to solve the aforementioned problems of the prior art by providing modified cross-section polyester fibers having satisfactory color tone, no fluff and high quality. This object is achieved by the following modified cross-section polyester fibers.

The modified cross-section polyester fibers comprising, as principal component, a polyester polymer and having a modified cross-section,
wherein
the polyester polymer is produced by polycondensation of an aromatic dicarboxylate ester in the presence of a catalyst,
the catalyst comprises at least one ingredient selected from among mixture (1) and reaction product (2) below,
the mixture (1) is a mixture of the following components (A) and (B):

(A) a titanium compound component comprising at least one compound selected from the group consisting of:

(a) titanium alkoxides represented by the following general formula (I):

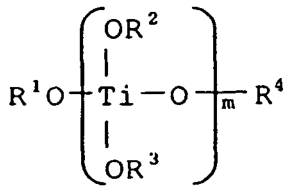

**(I)**

[wherein $R^1$, $R^2$, $R^3$ and $R^4$ each independently represent one species selected from among alkyl groups having 1 to 20 carbon atoms and phenyl groups, m represents an integer of 1-4, and when m is an integer of 2, 3 or 4, the two, three or four $R^2$ and $R^3$ groups may be the same or different], and
(b) reaction products of titanium alkoxides of general formula (I) above with aromatic polyvalent carboxylic acids represented by the following general formula (II):

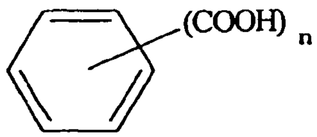

**(II)**

[wherein n represents an integer of 2-4]
or their anhydrides, and

(B) a phosphorus compound component comprising at least one compound represented by the following general formula (III):

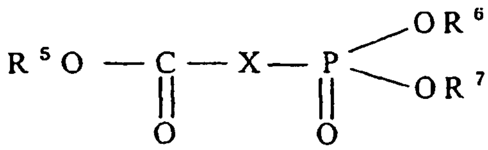

**(III)**

[wherein $R^5$, $R^6$ and $R^7$ each independently represent alkyl groups having 1 to 4 carbon atoms, and X represents at least one species selected from among $-CH_2-$ group and -CH(Y)-group (where Y represents phenyl group)], the mixture (1) for the catalyst is used with a mixing ratio such that the ratio (%) $M_{Ti}$ of the millimoles of titanium element in the titanium compound component (A) with respect to the number of moles of the aromatic dicarboxylate ester and the ratio (%) $M_p$ of the millimoles of phosphorus element in the phosphorus compound component (B) with respect to the number of moles of the aromatic dicarboxylate ester satisfy the following expressions (i) and (ii):

$$1 \leq M_p/M_{Ti} \leq 15 \qquad (i)$$

$$10 \leq M_p+M_{Ti} \leq 100 \qquad (ii),$$

and reaction product (2) is the reaction product of the following components (C) and (D):
(C) a titanium compound component comprising at least one compound selected from the group consisting of:

(c) titanium alkoxides represented by formula (I) above and
(d) reaction products of titanium alkoxides of general formula (I) above with aromatic polyvalent carboxylic acids represented by general formula (II) above or their anhydrides, and

(D) a phosphorus compound component comprising at least one phosphorus compound represented by the following

general formula (IV):

$$(R^8O)_p-\underset{\underset{\displaystyle O}{\|}}{P}-(OH)_{3-p} \qquad \textbf{(IV)}$$

[wherein $R^8$ represents alkyl groups having 1 to 20 carbon atoms or aryl groups having 6 to 20 carbon, and p represents an integer of 1 or 2].

Component (A) of the mixture (1) for the catalyst and component (C) of the reaction product (2) for the catalyst in the modified cross-section polyester fibers of the invention preferably contain the respective titanium alkoxide (a) and titanium alkoxide (c) each in a reaction molar ratio in the range of 2:1 to 2:5 with respect to the aromatic polyvalent carboxylic acid represented by general formula (II) or its anhydride.

In the reaction product (2) for the catalyst of the modified cross-section polyester fibers of the invention, the reaction ratio of component (D) with respect to component (C) is preferably in the range of 1:1 to 3:1, in terms of the ratio of the moles of phosphorus atoms in component (D) to the moles of titanium atoms in component (C) (P/Ti).

The phosphorus compound of general formula (IV) used in the reaction product (2) for the catalyst in the modified cross-section polyester fibers of the invention is preferably selected from among monoalkyl phosphates.

The aromatic dicarboxylate ester in the modified cross-section polyester fibers of the invention is preferably a diester produced by transesterification of an aromatic dicarboxylic acid dialkyl ester and an alkylene glycol ester, in the presence of a titanium compound-containing catalyst.

The aromatic dicarboxylic acid in the modified cross-section polyester fibers of the invention is preferably selected from among terephthalic acid, 1,2-naphthalenedicarboxylic acid, phthalic acid, isophthalic acid, diphenyldicarboxylic acid and diphenoxyethanedicarboxylic acid, and the alkylene glycol is preferably selected from among ethylene glycol, butylene glycol, trimethylene glycol, propylene glycol, neopentyl glycol, hexanemethylene glycol and dodecanemethylene glycol.

It is a second object of the invention to provide, in addition to the first object, modified cross-section polyester fibers which produce cloths having no sticky feel and excellent softness, anti-penetration property, low air permeability, water absorption and wear resistance. This object is achieved by the following modified cross-section polyester fibers.

Specifically, these are modified cross-section polyester fibers comprising as the principal component a polyester polymer obtained by polycondensation in the presence of the aforementioned specific catalyst, wherein the lateral cross-sectional shape of each single fiber is flat, and the flat shape is a form with 3-6 round cross-sectional shapes joined in the lengthwise direction.

The modified cross-section polyester fibers preferably comprise inorganic particles at 0.2-10 wt%.

In the lateral cross-section of the modified cross-section polyester fibers, the flatness represented by A/B as the ratio of the width A of the long axis to the maximum width B of the short axis perpendicular to the long axis B is preferably 3-6.

In the lateral cross-section of the modified cross-section polyester fibers, the irregularity represented by B/C as the ratio of the maximum width B of the short axis to the minimum width C (minimum width at the joints of the round cross-sectional shapes) is preferably larger than 1 and smaller than 5.

It is a third object of the invention to provide, in addition to the first object, modified cross-section polyester fibers with excellent water absorption and quick-drying properties. This object is achieved by the following modified cross-section polyester fibers.

Specifically, these are modified cross-section polyester fibers comprising as the principal component a polyester polymer obtained by polycondensation in the presence of the aforementioned specific catalyst, wherein 3-8 fins protrude outward from the fiber cross-section core in the lateral cross-section of each single fiber, and the protrusion coefficient as defined by formula (iii) below is between 0.3 and 0.7.

$$\text{Protrusion coefficient} = (a_1-b_1)/a_1 \qquad \text{(iii)}$$

[Here, $a_1$ represents the length from the center of an inscribed circle in the inner wall of the fiber cross-section to the tip of the fin, and $b_1$ represents the radius of the inscribed circle in the inner wall of the fiber cross-section.]

The fiber crystallinity of the modified cross-section polyester fibers is preferably no greater than 30%.

The fiber boiling water shrinkage ratio of the modified cross-section polyester fibers is preferably 15-70%.

It is a fourth object of the invention to provide, in addition to the first object, modified cross-section polyester fibers which produce cloths which are bulky and have a soft hand. This object is achieved by the following modified cross-section polyester fibers.

Specifically, these are modified cross-section polyester fibers comprising as the principal component a polyester polymer obtained by polycondensation in the presence of the aforementioned specific catalyst, wherein the lateral cross-section of each single fiber comprises a core and multiple fins protruding in a radial fashion from the core along the lengthwise direction of the core, and the polyester fibers satisfying all of the following relationships (iv) to (vi) are subjected to alkali reduction treatment to separate at least some of the fins from the cores.

$$1/20 \leq S_B/S_A \leq 1/3 \qquad (iv)$$

$$0.6 \leq L_B/D_A \leq 3.0 \qquad (v)$$

$$W_B/D_A \leq 1/4 \qquad (vi)$$

(Here, $S_A$ represents the cross-sectional area of the core, $D_A$ represents the core diameter if the cross-section is a circle or the circumscribed circle diameter if it is not a circle, and $S_B$, $L_B$ and $W_B$ represent the cross-sectional area, maximum length and maximum width of the fins, respectively.)

In the modified cross-section polyester fibers described above, a compound having a compatibility parameter $\chi$ represented by relationship (vii) below of 0.1-2.0 is preferably included in the polyester fiber prior to alkali treatment at 0.5-5.0 wt% with respect to the polyester fiber weight.

$$\chi = (V_a/RT)(\delta a - \delta b)^2 \qquad (vii)$$

(Here, $V_a$ represents the molar volume ($cm^3$/mol) of the polyester, R represents the gas constant (J/mol·K), T represents the absolute temperature (K) and δa and δb represent the solubility parameters ($J^{1/2}cm^{3/2}$) of the polyester and compound, respectively.)

It is a fifth object of the invention to provide, in addition to the first object, modified cross-section polyester fibers which produce a silky cloth having a rough squeaky feel, an excellent bulging feel, flexibility and a lightweight feel, with no dye spots. This object is achieved by the following modified cross-section polyester fibers.

Specifically, these are modified cross-section polyester fibers comprising as the principal component a polyester polymer obtained by polycondensation in the presence of the aforementioned specific catalyst, wherein the lateral cross-sectional shape of a single fiber is a shape comprising a triangular shaped section and a protrusion extending from one vertex of the triangular shape, where both of the following relationships (viii) and (ix) are satisfied, and having a hollow portion in the triangular shaped section constituting 3-15% thereof.

$$0.7 \leq L1/L2 \leq 3.0 \qquad (viii)$$

$$3.0 \leq h2/h1 \leq 10.0 \qquad (ix)$$

(Here, L1 represents the distance from the connection point between the triangular shaped section and the protrusion to the end of the protrusion, L2 represents the distance between the connection point between the triangular shaped section and the protrusion and the side of the triangular shaped section opposite the connection point, h1 represents the width of the protrusion and h2 represents the length of the side of the triangular shaped section opposite the connection point between the triangular shaped section and the protrusion.)

An organic sulfonic acid metal salt represented by general formula (V) below is preferably included in the modified cross-section polyester fibers at 0.5-2.5 wt% with respect to the weight of the polyester fiber.

$R^9SO_3M$ (V)

(Here, $R^9$ represents alkyl groups having 3 to 30 carbon atoms or aryl or alkylaryl group having 7 to 40 carbon atoms, and M represents an alkali metal or alkaline earth metal.)

## Brief Description of the Drawings

Fig. 1 is a set of schematic illustrations showing examples of lateral cross-sectional shapes for modified cross-section polyester fibers which achieve the second object of the invention.
Fig. 2 is a schematic illustration showing one example of a lateral cross-sectional shape for modified cross-section polyester fibers which achieves the second object of the invention, for explanation of the dimensions.
Fig. 3 is a schematic illustration showing one example of a lateral cross-sectional shape for modified cross-section polyester fibers which achieves the third object of the invention.
Fig. 4 is a schematic illustration showing one example of the discharge hole of a spinneret used for spinning of modified cross-section polyester fibers which achieves the third object of the invention.
Fig. 5 is a schematic illustration showing one example of a lateral cross-sectional shape for modified cross-section polyester fibers before alkali reduction treatment, which achieves the fourth object of the invention.
Fig. 6 is a schematic illustration showing examples of spinneret discharge holes used for spinning of modified cross-section polyester fibers which achieve the fourth object of the invention.
Fig. 7 is a schematic illustration showing a side view of modified cross-section polyester fibers (after alkali reduction treatment) which achieves the fourth object of the invention.
Fig. 8 is a schematic illustration showing one example of a lateral cross-sectional shape for modified cross-section polyester fibers which achieves the fifth object of the invention, for explanation of the dimensions.
Fig. 9 is a schematic illustration showing one example of the discharge hole of a spinneret used for spinning of modified cross-section polyester fibers which achieves the fifth object of the invention.

## Best Mode for Carrying Out the Invention

It is an essential feature of the modified cross-section polyester fibers of the invention that they are polyester fibers comprising a polyester polymer as the main component and having an modified cross-section, and that the polyester polymer is produced by polycondensation of an aromatic dicarboxylate ester in the presence of the specific catalyst described hereunder. This makes it possible to obtain modified cross-section polyester fibers having satisfactory color tone as well as no fluff and high quality, despite being spun from a spinneret with a complex discharge hole. In addition, since production can be stably accomplished from the polymer even if the modified cross-section polyester fibers have a high degree of irregularity, the fibers can exhibit adequate functions by their irregularity (water absorption, antifouling property, non-permeability) and hand (touch, color tone change, luster, etc.). The "modified cross-section" means a cross-sectional shape which is not a circular shape, such as an elliptical, flat, triangular, square, cross-shaped, star-shaped, C-shaped, H-shaped, I-shaped, L-shaped, S-shaped, T-shaped, U-shaped, V-shaped, W-shaped, X-shaped, Y-shaped or Z-shaped cross-section. The effect of the invention is more notably exhibited with complex cross-sectional shapes and modified cross-sections with strictly defined angles and dimensions of each portion of the cross-section.
The polycondensation catalyst comprises at least one selected from among (1) mixtures of the titanium compound component (A) and phosphorus compound component (B) described below and (2) reaction products of the titanium compound component (C) and phosphorus compound component (D) described below.
The titanium compound (A) of the mixture (1) for the polycondensation catalyst is comprised at least one compound selected from the group consisting of:

(a) titanium alkoxides represented by the following general formula (I):

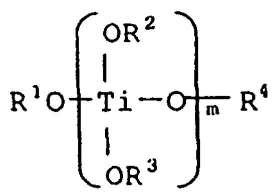

(I)

[wherein $R^1$, $R^2$, $R^3$ and $R^4$ each independently represent one species selected from among alkyl groups having 1 to 20 atoms, preferably 1 to 6 atoms, and phenyl groups, m represents an integer of 1-4 and preferably 2-4, and when m is an integer of 2, 3 or 4, the two, three or four $R^2$ and $R^3$ groups may be the same or different], and

(b) reaction products of titanium alkoxides of general formula (I) above with aromatic polyvalent carboxylic acids represented by the following general formula (II):

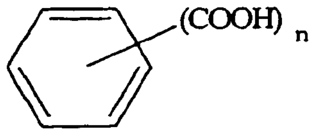

(II)

[wherein n represents an integer of 2-4 and preferably 3-4]

or their anhydrides.

The phosphorus compound (B) of the mixture (1) for the polycondensation catalyst is comprised at least one compound represented by the following general formula (III):

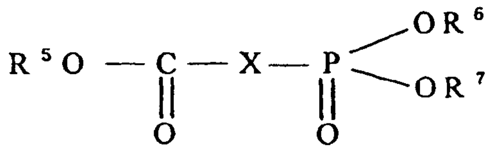

(III)

[wherein $R^5$, $R^6$ and $R^7$ each independently represent alkyl groups having 1 to 4 carbon atoms, and X represents at least one species selected from among $-CH_2-$ group and -CH(Y)-group (where Y represents phenyl group)].

The reaction product (2) for a polycondensation catalyst is the reaction product of a titanium compound component (C) and phosphorus compound component (D).

The titanium compound component (C) is comprised at least one compound selected from the group consisting of:

(c) titanium alkoxides represented by formula (I) above and

(d) reaction products of titanium alkoxides of general formula (I) above with aromatic polyvalent carboxylic acids represented by general formula (II) above or their anhydrides.

The phosphorus compound component (D) is comprised at least one phosphorus compound represented by the following general formula (IV):

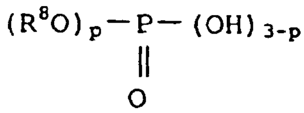

(IV)

[wherein $R^8$ represents alkyl groups having 1 to 20 carbon atoms or aryl groups having 6 to 20 carbon atoms, and p represents an integer of 1 or 2].

When a mixture (1) of the titanium compound component (A) and the phosphorus compound component (B) is used as the polycondensation catalyst, the titanium alkoxide (a) represented by general formula (I) or the reaction product (b) of the titanium alkoxide (a) and the aromatic carboxylic acid represented by general formula (II) or its anhydride, used as the titanium compound component (A), have high solubility and compatibility for polyester polymers, and therefore even if residue of the titanium compound component (A) remains in the polyester polymer obtained by polycondensation, there is no accumulation of foreign matter around the spinneret during melt spinning, so that polyester fibers of satisfactory quality can be produced with high spinning efficiency.

As titanium alkoxides (a) represented by general formula (I) to be used in the polycondensation catalyst titanium compound component (A) or (C) according to the invention, there are preferred tetraisopropoxytitanium, tetrapropoxytitanium, tetra-n-butoxytitanium, tetraethoxytitanium, tetraphenoxytitanium, octaalkyl trititanate and hexaalkyl dititanate.

The aromatic polyvalent carboxylic acid of general formula (II) or its anhydride which is reacted with the titanium alkoxide (a) or (c) is preferably selected from among phthalic acid, trimellitic acid, hemimellitic acid, pyromellitic acid, and their anhydrides. In particular, using trimellitic anhydride will yield a reaction product exhibiting high affinity for the

polyester polymer, and is effective for preventing accumulation of foreign matter.

When the titanium alkoxide (a) or (c) for the titanium compound component (A) or (C) is reacted with the aromatic polyvalent carboxylic acid of general formula (II) or its anhydride, it is preferred, for example, to dissolve the aromatic polyvalent carboxylic acid or its anhydride in a solvent, add the titanium alkoxide (a) or (c) dropwise to the solution and heat the mixture for at least 30 minutes at a temperature of 0-200°C. The solvent used in this case is preferably selected as desired from among ethanol, ethylene glycol, trimethylene glycol, tetramethylene glycol, benzene and xylene.

There is no particular restriction on the molar ratio for reaction between the titanium alkoxide (a) or (c) with the aromatic polyvalent carboxylic acid of general formula (II) or its anhydride, but if the proportion of the titanium alkoxide is too high, the color tone of the resulting polyester may be impaired or the softening point may be lowered, whereas if the proportion of the titanium alkoxide is too low, the polycondensation reaction may be impeded. The molar ratio for the reaction between the titanium alkoxide (a) or (c) with the aromatic polyvalent carboxylic acid of general formula (II) or its anhydride is therefore preferably in the range of (2:1) to (2:5).

The reaction product (b) or (d) obtained by the reaction may be used directly, or it may be used after purification by recrystallization with acetone, methyl alcohol and/or ethyl acetate.

The phosphorus compound (phosphonate compound) of general formula (III) to be used for a phosphorus compound component (B) of the mixture (1) for the polycondensation catalyst according to the invention is preferably selected from among dimethyl esters, diethyl esters, dipropyl esters and dibutyl esters of phosphonic acid derivatives such as carbomethoxymethane-phosphonic acid, carboethoxymethanephosphonic acid, carbopropoxymethanephosphonic acid, carbobutoxymethanephosphonic acid, carbomethoxyphenylmethanephosphonic acid, carboethoxyphenylmethanephosphonic acid, carbopropoxyphenyl-methanephosphonic acid, carbobutoxyphenylmethanephosphonic acid, and the like.

When a phosphorus compound component (B) composed of a phosphorus compound (phosphonate compound) of general formula (III) is used for polycondensation reaction of the aromatic dicarboxylate ester, the reaction with the titanium compound component (A) proceeds more moderately as compared to phosphorus compounds ordinarily used as reaction stabilizers, and therefore the catalytically active life of the titanium compound component (A) during the polycondensation reaction process is longer and as a result, a smaller proportion of the titanium compound component (A) may be used with respect to the amount of the aromatic dicarboxylate ester in the polycondensation reaction system. Also, even if a large amount of stabilizer is added to the polycondensation reaction system containing a phosphorus compound component (B) composed of a phosphorus compound of general formula (III), there is no reduction in thermal stability of the obtained polyester polymer and its color tone is also satisfactory.

When the mixture (1) is used as the polycondensation catalyst according to the invention, the mixture (1) is used with a mixing ratio such that the ratio (%) $M_{Ti}$ of the millimoles of titanium element in the titanium compound component (A) with respect to the number of moles of the aromatic dicarboxylate ester and the ratio (%) $M_p$ of the millimoles of phosphorus element in the phosphorus compound component (B) with respect to the number of moles of the aromatic dicarboxylate ester satisfy the following relational expressions (i) and (ii):

$$1 \leq M_p/M_{Ti} \leq 15 \qquad (i)$$

$$10 \leq M_p+M_{Ti} \leq 100 \qquad (ii).$$

The ratio $M_p/M_{Ti}$ is between 1 and 15, and preferably between 2 and 10. If the ratio $M_p/M_{Ti}$ is less than 1, the color tone of the obtained polyester polymer may be yellowish, while if it is greater than 15, the polycondensation reactivity of the polycondensation catalyst of such a composition will be insufficient, making it difficult to obtain the intended polyester polymer. The range for the ratio $M_p/M_{Ti}$ according to the invention is relatively narrow compared to that for conventional Ti-P catalysts, but establishing such a range produces an excellent effect which has not been obtained with conventional Ti-P catalysts.

The value of the sum ($M_p$+$M_{Ti}$) is between 10 and 100, and preferably between 20 and 70. If the value of ($M_p$+$M_{Ti}$) is less than 10, the fiber-forming property of the obtain polyester polymer, the production efficiency in the melt spinning process and the performance of the obtained fibers will be inadequate. If the value of ($M_p$+$M_{Ti}$) is greater than 100, a small but significant degree of foreign matter accumulation will occur around the spinneret when the obtained polyester polymer is used for melt spinning. The value of $M_{Ti}$ is generally preferred to be 2-15 and more preferably 3-10.

When the reaction product (2) is used as a polycondensation catalyst according to the invention, the phosphorus compound of general formula (IV) used as the phosphorus compound (D) may be, for example, a monoalkyl phosphate such as mono-n-butyl phosphate, monohexyl phosphate, monododecyl phosphate, monolauryl phosphate or monooleyl

phosphate; a monoaryl phosphate such as monophenyl phosphate, monobenzyl phosphate, mono(4-ethylphenyl) phosphate, monobiphenyl phosphate, mononaphthyl phosphate or monoanthryl phosphate; a dialkyl phosphate such as diethyl phosphate, dipropyl phosphate, dibutyl phosphate, dilauryl phosphate or dioleyl phosphate, or a diaryl phosphate such as diphenyl phosphate. Preferred among these are monoalkyl phosphates or monoaryl phosphates, wherein p in formula (IV) is 1.

The phosphorus compound component (D) used for the invention may be a mixture of two or more phosphorus compounds of general formula (IV), and as examples of preferred combinations there may be mentioned mixtures of monoalkyl phosphates and dialkyl phosphates or mixtures of monophenyl phosphates and diphenyl phosphates. Particularly preferred are compositions wherein a monoalkyl phosphate constitutes at least 50% and especially at least 90% of the mixture based on the total weight of the mixture.

The method of preparing the reaction product of the titanium compound component (C) and phosphorus compound component (D) may involve, for example, combining the components (C) and (D) and heating them in glycol. Specifically, heating a glycol solution containing the titanium compound component (C) and the phosphorus compound component (D) will cause clouding of the glycol solution with precipitation of the components (C) and (D) as reaction products. The precipitate may be collected for use as a catalyst for polyester polymer production.

The glycol used in this case is preferably the same glycol component for the polyester to be produced using the obtained catalyst. For example, ethylene glycol is preferred when the polyester is polyethylene terephthalate, 1,3-propanediol is preferred when it is polytrimethylene terephthalate and tetramethylene glycol is preferred when it is polytetramethylene terephthalate.

The polycondensation reaction product (2) according to the invention may be produced by a method of simultaneously combining the titanium compound component (C) and phosphorus compound (D) and the glycol, and heating them. However, since heating causes the titanium compound component (C) and phosphorus compound component (D) to react and produce a precipitated reaction product which is insoluble in glycol, it is preferred for the reaction up to precipitation to proceed in a uniform manner. In order to efficiently obtain the reaction precipitate, therefore, the preferred production process is one in which separate glycol solutions of the titanium compound component (C) and phosphorus compound component (D) are prepared beforehand, and the solutions are then combined and heated.

The temperature for the reaction between components (C) and (D) is preferably between 50°C and 200°C, and the reaction time is preferably from 1 minute to 4 hours. If the reaction temperature is too low, the reaction may proceed insufficiently or an excessive reaction time may be required, making it impossible to efficiently obtain a reaction precipitate by uniform reaction.

The mixing proportion of the titanium compound component (C) and phosphorus compound component (D) heated to reaction in glycol is preferably in the range of 1.0 to 3.0 and more preferably 1.5 to 2.5, as the molar ratio of phosphorus atoms with respect to titanium atoms. Within this range, the phosphorus compound component (D) and titanium compound component (C) will react almost completely, in order to avoid the presence of an incomplete reaction product, and therefore the reaction product may be used directly to yield a polyester polymer with a satisfactory color tone. In addition, the virtual lack of excess unreacted phosphorus compound (V) results in high productivity without impeding the polyester polymerization reactivity.

The reaction product (2) for the polycondensation catalyst used for the invention preferably comprises a compound represented by the following general formula (VI):

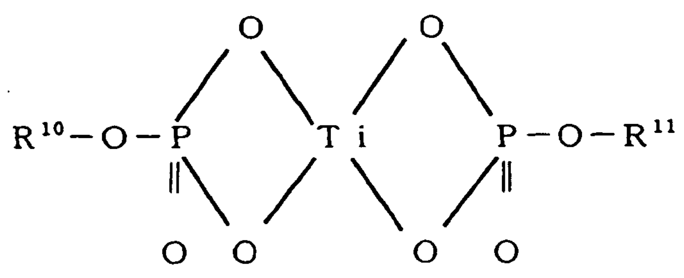

(VI)

(wherein $R^{10}$ and $R^{11}$ each independently represent at least one species selected from among $C_{6-12}$ aryl groups derived from $R^1$, $R^2$, $R^3$ and $R^4$ in general formula (I) representing the titanium alkoxide for titanium compound component (C) and $R^8$ in general formula (IV) representing the phosphorus compound for phosphorus compound component (D).

Since the reaction product of the titanium compound and the phosphorus compound (III) or (IV) represented by formula (VI) has high catalytic activity, polyester polymers obtained using it have satisfactory color tone (low b value), and exhibit satisfactorily practical polymer performance with a sufficiently low content of acetaldehydes, residual metals and cyclic trimers for practical use. The reaction product represented by formula (VI) is preferably present at 50 wt% or

greater and more preferably at 70 wt% or greater.

If the aromatic dicarboxylate ester is subjected to polycondensation in the presence of the reaction product (2), it may be used as a polyester production catalyst directly, without separating the glycol and the precipitated reaction product (2) obtained in the aforementioned manner. Also, after the precipitate has been separated from the glycol solution containing the precipitated reaction product (2) by means such as centrifugal precipitation or filtration, the precipitated reaction product (2) may be recrystallized with, for example, acetone, methyl alcohol and/or water for purification and the purified product used as the catalyst. The structure of the catalyst may be confirmed by solid NMR and XMA metal quantitative analysis.

The polyester polymer used for the invention is obtained by polycondensation of an aromatic dicarboxylate ester in the presence of a catalyst comprising the aforementioned mixture (1) of a titanium compound component (A) and phosphorus compound (phosphonate compound) (B) and/or the reaction product (2) of a titanium compound component (C) and a phosphorus compound component (D). According to the invention, the aromatic dicarboxylate ester is preferably a diester comprising an aromatic dicarboxylic acid component and an aliphatic glycol component.

The aromatic dicarboxylic acid is preferably composed mainly of terephthalic acid. More specifically, terephthalic acid preferably constitutes at least 70 mole percent based on the total aromatic dicarboxylic acid component content. As examples of preferred aromatic dicarboxylic acids other than terephthalic acid there may be mentioned phthalic acid, isophthalic acid, naphthalenedicarboxylic acid, diphenyldicarboxylic acid and diphenoxyethanedicarboxylic acid.

The aliphatic glycol component is preferably an alkylene glycol, of which there may be used, for example, ethylene glycol, trimethylene glycol, propylene glycol, tetramethylene glycol, neopentyl glycol, hexanemethylene glycol and dodecamethylene glycol, with ethylene glycol being particularly preferred.

According to the invention, the polyester polymer is preferably a polyester comprising as its main repeating unit ethylene terephthalate composed of terephthalic acid and ethylene glycol. "Main" means that the ethylene terephthalate repeating unit constitutes at least 70 mole percent of the total repeating units in the polyester.

The polyester polymer used for the invention may also be a mixed polyester obtained by copolymerization of polyester components as the acid component or diol component.

As mixed carboxylic acid components there may be used the aforementioned aromatic dicarboxylic acids, of course, as well difunctional carboxylic acid components including aliphatic dicarboxylic acids such as adipic acid, sebacic acid, azelaic acid and decanedicarboxylic acid and alicyclic dicarboxylic acids such as cyclohexanedicarboxylic acid, or their ester-forming derivatives, as starting materials. As mixed diol components there may be used the aforementioned aliphatic diols, of course, as well as alicyclic glycols such as cyclohexanedimethanol and aromatic diols such as bisphenol, hydroquinone and 2,2-bis(4-β-hydroxyethoxyphenyl)propane, as starting materials.

In addition, there may also be used mixed polyester polymers obtained by copolymerization of polyfunctional compounds such as trimesic acid, trimethylolethane, trimethylolpropane, trimethylolmethane and pentaerythritol as mixed components.

Such polyester polymers and mixed polyester polymers may be used alone or in combinations of two or more.

According to the invention, the polyester polymer used is preferably the polycondensation product of an aromatic dicarboxylate ester composed of an aromatic dicarboxylic acid and aliphatic glycol, as described above. The aromatic dicarboxylate ester may also be produced by diesterification reaction of an aromatic dicarboxylic acid and an aliphatic glycol, or it may be produced by transesterification of an aromatic dicarboxylic acid dialkyl ester and an aliphatic glycol. However, methods involving transesterification using dialkyl esters of aromatic dicarboxylic acids as starting materials are more advantageous than methods of diesterification using aromatic dicarboxylic acids as starting materials, because they produce less debris of the phosphorus compound added as a phosphorous stabilizer during the polycondensation reaction.

Also, all or a portion of the titanium compound component (A) or (C) is preferably added before initiation of the transesterification reaction, for use as a double reaction catalyst, i.e. a transesterification reaction catalyst and polycondensation reaction catalyst. This will allow a reduction in the titanium compound content of the final polyester. More specifically, in the case of polyethylene terephthalate, for example, transesterification reaction between an aromatic dicarboxylic acid dialkyl ester (composed mainly of terephthalic acid) and ethylene glycol is preferably carried out in the presence of the titanium compound component (A) comprising (a) at least one compound selected from the group consisting of titanium alkoxides represented by general formula (I) above and (b) products of reaction between titanium alkoxides of general formula (I) with aromatic polyvalent carboxylic acids represented by general formula (II) above or their anhydrides. A phosphorus compound (phosphonate compound) represented by general formula (III) above, or the reaction product of a titanium compound component (C) and the aforementioned phosphorus compound component (D), is preferably further added to the reaction mixture comprising the diester of the aromatic dicarboxylic acid and ethylene glycol obtained by the transesterification reaction, and polycondensation reaction is conducted in their presence.

The transesterification reaction will normally be conducted under ordinary pressure, but conducting it under a pressure of 0.05-0.20 MPa will further promote the reaction catalyzed by the action of the titanium compound component (A) while also avoiding bulk generation of diethylene glycol by-product, so that more favorable thermal stability and other

properties can be achieved. The temperature is preferably 160-260°C.

When the aromatic dicarboxylic acid used for the invention is terephthalic acid, the starting materials used for the polyester will be terephthalic acid and dimethyl terephthalate. In this case, there may be used recovered dimethyl terephthalate obtained by depolymerization of a polyalkylene terephthalate, or recovered terephthalic acid obtained by hydrolysis thereof. The use of reprocessed polyesters from salvaged PET bottles, fiber products, polyester film products and the like is preferred from the standpoint of effective utilization of resources.

The polycondensation reaction may be carried out in a single tank or in a plurality of separate tanks. The obtained product is a polyester according to the invention, and the polyester obtained by the polycondensation process is usually extruded in a molten state and cooled to form particles (chips).

The polyester used for the invention, which is obtained by the polycondensation process described above, may be further subjected to solid phase polycondensation if desired.

The solid phase polycondensation consists of one or more steps and is carried out at a temperature of 190-230°C under a pressure of 1 kPa to 200 kPa in an inert gas atmosphere such as nitrogen, argon or carbon dioxide gas.

The particulate polyester obtained from the solid phase polycondensation process is then subjected to water treatment involving contact with water, steam, a steam-laden inert gas or steam-laden air as necessary, for inactivation of the catalyst remaining in the chips.

The polyester production process described above comprising esterification and polycondensation steps may be carried out in a batch, semi-continuous or continuous system.

The polyester polymer used for the invention is preferably selected from among polyethylene terephthalate, polytrimethylene terephthalate and polytetramethylene terephthalate.

The polyester used for the invention preferably has an L* value of 77-85 and a b* value of 2-5 based on the L*a*b* color system (JIS Z8729).

The intrinsic viscosity of the polyester used for the invention obtained in the manner described above is preferably in the range of 0.40-0.80, more preferably 0.45-0.75 and even more preferably 0.50-0.70. The intrinsic viscosity is preferably not less than 0.40 because the tenacity of the fibers may be insufficient. On the other hand, an intrinsic viscosity of greater than 0.80 is uneconomical because it requires excessive raising of the intrinsic viscosity of the starting polymer.

The polyester used for the invention may, if necessary, contain small amounts of additives such as antioxidants, ultraviolet absorbers, flame retardants, fluorescent brighteners, delustering agents, color correctors, antifoaming agents, antistatic agents, antimicrobial agents, light stabilizers, thermal stabilizers, light blockers or the like, and preferably there are added titanium dioxide as a delustering agent and antioxidants as stabilizers.

The titanium dioxide used preferably has a mean particle size of 0.01-2 μm, and is preferably included in the polyester polymer at 0.01-10 wt%.

Incidentally, the catalyst-derived titanium content in the polyester polymer does not include the titanium derived from any titanium dioxide added as a delustering agent.

When the polyester polymer contains titanium dioxide as a delustering agent, the titanium dioxide of the delustering agent may be removed from the polyester polymer sample for measurement by dissolving the polyester polymer in hexafluoroisopropanol, supplying the solution to centrifugation treatment to separate and precipitate the titanium dioxide particles from the solution, separating and collecting the supernatant liquid by the gradient method and evaporating off the solvent from the collected fraction to prepare the testing sample.

As antioxidants there are preferably used hindered phenol-based antioxidants. An antioxidant is preferably added at no greater than 1 wt% and more preferably 0.005-0.5 wt%. Addition in excess of 1 wt% will result in a saturated effect and may cause scum production during melt spinning. Hindered phenol-based antioxidants may also be used in combination with thioether-based secondary antioxidants.

There are no particular restrictions on the method of adding such antioxidants to the polyester, and they may be added at any desired stage from initiation of the transesterification reaction to completion of the polycondensation reaction.

The second object of the invention is to provide, in addition to the first object, modified cross-section polyester fibers which produce cloths having no sticky feel and excellent softness, anti-penetration property, low air permeability, water absorption and wear resistance, and this object is achieved by the modified cross-section polyester fibers described below.

Specifically, these are modified cross-section polyester fibers comprising as the principal component a polyester polymer obtained by polycondensation in the presence of the aforementioned specific catalyst, wherein the lateral cross-sections of the fibers are flat-shaped, and the flat shape is a form with 3-6 round cross-sectional shapes joined in the lengthwise direction.

Here, "joined" does not mean actually joined on the level of melt spinning, but rather that the result is a "joined" shape. Also, the "round cross-sectional shapes" are not necessarily perfectly round but may also be elliptical.

The lateral cross-sectional shapes of the fibers will now be explained with respect to Fig. 1. Figs. 1(a) to (c)

are schematic illustrations of lateral cross-sectional shapes for the fibers, with (a) showing 3, (b) showing 4 and (c) showing 5 joined round cross-sectional shapes.

That is, the lateral cross-sectional shapes of the fibers are forms with round cross-sectional shapes joined in the lengthwise direction (long-axis direction), where hill/hill pairs and valley/valley pairs are aligned symmetrically on either side of the long axis, and the number of these round cross-sectional shapes is preferably 3 to 6. When the number of round cross-sectional shapes is 2, the softness approaches that of a cloth with round cross-sectional fibers, but the anti-penetration property, low air permeability and water absorption tend to be reduced. On the other hand, when the number of round cross-sectional shapes is greater than 7, the fibers are more susceptible to breakage and tend to have lower wear resistance.

The modified cross-section polyester fibers preferably comprise inorganic particles at 0.2-10 wt%, for an improved anti-penetration property.

Referring next to Fig. 2, the flatness represented by A/B as the ratio of the width A of the long axis of the lateral cross-section of the modified cross-section polyester fibers to the maximum width B of the short axis perpendicular to the long axis A is preferably 3 to 6. If it is smaller than 3 the softness is reduced, while if it is greater than 6, a sticky feel tends to be produced.

From the standpoint of eliminating a sticky feel and improving the water absorption of the modified cross-section polyester fibers, the irregularity represented by B/C as the ratio of the maximum width B of the short axis of the flat cross-section to the minimum width C (minimum width at the joints of the round cross-sectional shapes) is preferably such that $1 < B/C < 5$. Specifically, since water is diffused by capillary action in the valleys of the flat cross-section fibers of the invention, an excellent water absorption property is obtained compared to round cross-section fibers, whereas an irregularity degree of only 1 produces simple flat fibers, resulting in a sticky feel and eliminating the water absorption property. If B/C is greater than 5, it is possible to avoid a sticky feel while imparting a water absorption property, but other disadvantages can occur, i.e., the joints of the round cross-sectional shapes become too short and the tenacity of the flat cross-section fibers is reduced tending to result in yarn breakage, and therefore B/C is preferably such that $1 < B/C < 5$ and more preferably $1.1 \leq B/C \leq 2$.

There are no particular restrictions on the single fiber size of the modified cross-section polyester fibers or on the overall strand size of modified cross-section polyester fibers composed of the single fibers, but for use in clothing, the single fiber size is preferably 0.3-3.0 dtex and the overall strand size of modified cross-section polyester fibers is preferably 30-200 dtex.

It is a third object of the invention to provide, in addition to the first object, modified cross-section polyester fibers with excellent water absorption and quick-drying properties. This object is achieved by the following modified cross-section polyester fibers.

Specifically, these are modified cross-section polyester fibers comprising as the principal component a polyester polymer obtained by polycondensation in the presence of the aforementioned specific catalyst, wherein 3-8 fins protrude outward from the fiber cross-section core in the lateral cross-section of each fiber, and the protrusion coefficient as defined by formula (iii) below is between 0.3 and 0.7.

$$\text{Protrusion coefficient} = (a_1 - b_1)/a_1 \qquad \text{(iii)}$$

[Here, $a_1$ represents the length from the center of an inscribed circle in the inner wall of the fiber cross-section to the tip of the fin, and $b_1$ represents the radius of the inscribed circle in the inner wall of the fiber cross-section.]

Polyester fibers having such lateral cross-sectional shapes have performance of withstanding impact during draw-false twisting steps and of exhibiting adequate water absorption and quick-drying properties in cloths even after draw-false twisting steps.

Such polyester fibers also generate low yarn breakage (processing breaks) and fluff during draw-false twisting steps, even when the false twisting steps are carried out under ordinary conditions. The obtained draw-false twisted fibers also have moderate dispersion of the degrees of flatness of the lateral cross-sections of the fibers in the fiber axis directions, to create fiber lateral cross-sections which are not uniform in the fiber axis directions, thus forming fiber aggregates with large gaps between the fibers. Such large gaps between fibers bring about effects of greater water absorption and quick-drying performance, and of enhanced washing durability of the performance. Fiber aggregates having degrees of flatness of the lateral cross-sections of the fibers moderately dispersed in the fiber axis directions also exhibit performance giving a natural dry feel to cloths.

Fins having a protrusion coefficient of less than 0.3 do not form adequate capillary gaps in the lateral cross-sections of the fibers after draw-false twisting, and therefore cannot exhibit water absorption or quick-drying properties. Such short fins also exhibit a low anchor effect when the cloth is subjected to water absorption treatment, such that the washing durability of the treatment agent tends to be lowered. The hand of the cloth also becomes more flat and paper-like. On the other hand, fins having a protrusion coefficient of greater than 0.7 undergo more concentration of working tension on the fins during draw-false twisting, and therefore partial collapse of the fiber cross-sections occurs making it impossible to achieve adequate capillary formation, and the water absorption performance is therefore lower.

Even with fins having a protrusion coefficient of 0.3-0.7, if the number of such fins is 1 or 2 in the fiber lateral cross-section, a maximum of only one inwardly closed fiber lateral cross-section portion will be formed, and therefore the capillary phenomenon will not be as easily expressed and the absorption performance will be lower. The hand of the cloth will also tend to become more flat and paper-like. With more than 8 fins, on the other hand, working tension tends to concentration on the fins during draw-false twisting, resulting in partial collapse of the fiber cross-sections and making it impossible to achieve adequate capillary formation, thereby lowering the water absorption performance.

The fiber crystallinity of the modified cross-section polyester fibers is preferably no greater than 30%, and the boiling water shrinkage ratio is preferably at least 15%. This limits increase in the crystalline region of the fibers to prevent too rigid a fiber structure and thus facilitate moderate dispersion of the degrees of flatness of the lateral cross-sections of the fibers in the fiber axis directions, for draw-false twisted fibers under ordinary draw-false twisting conditions. The result is improved water absorption and quick-drying performance and enhanced washing durability of the performance, as well as a natural dry feel for cloths. On the other hand, a stable fiber structure can be obtained by limiting the boiling water shrinkage ratio to no greater than 70%.

Any publicly known melt spinning method may be employed to produce the modified cross-section polyester fibers described above. For example, there may be employed a method of drying the polyester under ordinary conditions, melting it with a melt extruding machine, such as a screw extruder, discharging the melt from a spinneret (Fig. 4) having 3 to 8 and preferably 4 to 6 fin-forming discharge holes consisting of connected small circular openings (5 in Fig. 4) and slit openings (4 in Fig. 4), situated at spaced distances around a core-forming round discharge hole (3 in Fig. 4), such as disclosed, for example, in Japanese Patent Application No. 3076372, and then cooling, solidifying and winding up according to methods known in the prior art. In order to obtain fibers with the crystallinity and boiling water shrinkage ratio specified above, the winding speed is preferably 2000-4000 m/min and more preferably 2500-3500 m/min.

Here, the radius of the core-forming round discharge hole ($b_2$ in Fig. 4) and the lengths of the ends of the fin-forming discharge holes from the center of the circular discharge hole ($a_2$ in Fig. 4) may be altered to freely set the protrusion coefficient of the fiber cross-sections to within 0.3-0.7. The spin block temperature and/or cooling air flow volume may also be varied to achieve some degree of control over the protrusion coefficient of the fiber cross-sections. The cooling air is preferably blown from a cross-flow type spinning stack with a length of 50-100 cm situated with its top 5-15 cm below the spinneret.

It is a fourth object of the invention to provide, in addition to the first object, modified cross-section polyester fibers which produce cloths that are bulky and have a soft hand. This object is achieved by the following modified cross-section polyester fibers.

Specifically, these are modified cross-section polyester fibers comprising as the principal component a polyester polymer obtained by polycondensation in the presence of the aforementioned specific catalyst, wherein the fiber lateral cross-section comprises a core and multiple fins protruding in a radial fashion from the core along the lengthwise direction of the core, and the polyester fibers satisfying all of the following relationships (iv) to (vi) are subjected to alkali reduction treatment to separate at least some of the fins from the cores.

$$1/20 \le S_B/S_A \le 1/3 \quad \text{(iv)}$$

$$0.6 \le L_B/D_A \le 3.0 \quad \text{(v)}$$

$$W_B/D_A \le 1/4 \quad \text{(vi)}$$

(Here, $S_A$ represents the cross-sectional area of the core, $D_A$ represents the core diameter if the cross-section is a circle or the circumscribed circle diameter if it is not a circle, and $S_B$, $L_B$ and $W_B$ represent the cross-sectional area, maximum length and maximum width of the fins, respectively.)

Fig. 5 shows $S_A$, $D_A$, $S_B$, $L_B$ and $W_B$ for an example of a fiber lateral cross-section.

If $S_B/S_A < 1/20$ or $S_B/S_A > 1/3$, i.e. if fins are present having a cross-sectional area of smaller than 1/20 or larger than 1/3 of the cross-sectional area of the core, the fiber bulk will be reduced.

Also, if $L_B/D_A < 0.6$, i.e. if fins are present having a maximum length of less than 0.6 times the core diameter, the fiber bulk will be reduced, while on the other hand, if $L_B/D_A > 3.0$, i.e. if fins are present having a maximum length

of greater than 3.0 times the core diameter, the fins will tend to bend and produce a rough hand.

In addition, if $W_B/D_A > 1/4$, i.e. if fins are present having a maximum width of larger than 1/4 the core diameter, decomposition of the fins by alkali reduction treatment will be impeded.

A smaller maximum width of the fins will facilitate separation of the fins by alkali reduction treatment, but if it is too small the fins will tend to bend, and therefore the minimum value for $W_B/D_A$ is preferably about 1/8.

As a more detailed explanation of the dimensions of the core and fins of the fibers, the denier of the fins is preferably no greater than 0.9 dtex and more preferably no greater than 0.7 dtex. If the denier of the fins is too great, it will not be possible to obtain a fine touch by split fins, and an increased fin area will result in an inferior drape property by splitting. The size of the core is preferably from 1 dtex to 5 dtex. If the core size is greater than 5 dtex, it will not be possible to obtain adequate softness even if the fins and core are split, and the hand of fabrics will tend to be harder. If the size is less than 1 dtex, the mutual filling effect will be increased even if the multilobal cross-sections have sharp shapes, and it will thus tend to be difficult to effectively obtain large gaps.

In the polyester fibers before alkali reduction treatment, a compound having a compatibility parameter $\chi$ represented by relationship (vii) below of 0.1-2.0 is preferably present in the polyester fibers at 0.5-5.0 wt% with respect to the total fiber weight. This will aid separation of the fins and cores, to obtain effects of increased bulk and enhanced hand.

$$\chi = (V_a/RT)(\delta a - \delta b)^2 \qquad \text{(vii)}$$

(Here, $V_a$ represents the molar volume ($cm^3/mol$) of the polyester, R represents the gas constant (J/mol·K), T represents the absolute temperature (K) and δa and δb represent the solubility parameters ($J^{1/2}/cm^{1/2}$) of the polyester and compound, respectively.)

If $\chi$ is less than 0.1 the polyester and the compound become compatibilized making it difficult to separate the fins by alkali reduction, while if $\chi$ is greater than 2.0 the polyester and the compound become completely phase separated and the polymer becomes thickened, thereby tending to lower the spinning properties.

If the content of the compound in the polyester is less than 0.5 wt% it becomes difficult to achieve an effect of increased bulk, while if the content is greater than 5.0 wt% the compound tends to aggregate, thus impeding the same effect.

As specific examples for the compound there may be mentioned polymers such as polyethylene, polypropylene, polyisobutylene, polystyrene, polytetrafluoroethylene, polychlorotetraethylene, polychlorotrifluoroethylene, polyvinyl propionate, polyheptafluorobutyl acrylate, polybutadiene, polyisoprene, polychloroprene, polyethylene glycol, polytetramethylene glycol, polytriethylene glycol, polymethyl acrylate, polypropyl acrylate, polybutyl acrylate, polyisobutyl acrylate, polymethyl methacrylate, polyethyl methacrylate, polybenzyl methacrylate, polyethoxyethyl methacrylate, polyformaldehyde, polyethylene sulfide and polystyrene sulfide, as well as silicones and modified forms thereof. These compounds may also be used in combinations of two or more.

If the mean molecular weight of the compound is too low, thermal decomposition will occur during residence in the extruder or spinning pack, while if it is too high the melt miscibility with the polyester is reduced, and therefore the preferred range is 3000-25,000.

For addition and mixing of the compound with the polyester, there may be employed any desired publicly known method such as, for example, a method of melt kneading the polyester and the compound and pelleting the melt, a method of injection blending of the compound into the molten polyester during the melt spinning step, or a method of blending with a static mixer.

The polyester fibers prior to alkali reduction treatment may be obtained by the following method, for example.

That is, the polyester may be melted and discharged through a core-forming discharge hole while the same polyester melt discharged through multiple fin-forming slit-shaped discharge holes arranged in a radial fashion at spaced distances around the discharge hole is joined therewith while in a molten state, and both cooled to solidity.

More specifically, the polyester is melted and discharged through a nozzle such as shown in Fig. 6A, for example, having a core-forming round discharge hole 5 and multiple (four in Fig. 6A) fin-forming slit-shaped discharge holes arranged in a radial fashion at spaced distances around the core-forming round discharge hole 5, and then the discharged polyester from the discharge hole 5 and the discharged polyester from the discharge holes 6 are joined while in a molten state and cooled to solidity.

The spun filament may also be drawn and heat treated, if necessary.

If the number of fins is 1 or greater than 7, the gaps between the filaments formed by alkali reduction treatment are small and it thus becomes difficult to impart adequate bulk. The preferred number of fin-forming slit-shaped discharge holes arranged around a single core-forming discharge hole is 3 to 6, and more preferably 4. The cross-sectional areas, maximum lengths and maximum widths of the fins do not necessarily need to be the same, and they may be different for different fins. The fins preferably protrude radially outward in an isotropic fashion around the center core, but this is

not a restrictive condition.

According to the invention, there are no particular restrictions on the dimensions of the core-forming round discharge hole 5 and the fin-forming slit-shaped discharge holes 6, but in order for the core cross-sectional area and diameter and the fin cross-sectional area, maximum length and maximum width to be within the ranges specified by the three relationships (iv), (v) and (vi) above, preferably the following conditions (x)-(xii) are all satisfied for $D'_A$, $L'_B$, $W'_B$ and $L'_{AB}$, where $D'_A$ is the diameter of the core-forming round discharge hole 5 (or if the cross-sectional shape of the discharge hole 5 is not a circle, $D'_A$ is the circumscribed circle diameter of the discharge hole 5), $L'_B$ and $W'_B$ are the maximum length and maximum width of the fin-forming slit-shaped discharge holes 6, respectively, and $L'_{AB}$ is the shortest space between the discharge holes 5 and 6 on the discharge plane.

$$\cdot \ 1 \leq L'_B/D'_A \leq 4 \qquad (x)$$

$$1/7 \leq W'_B/D'_A \leq 1/2 \qquad (xi)$$

$$0.01\ \text{mm} \leq L'_{AB} \leq 0.2\ \text{mm} \qquad (xii)$$

When $D'_A$, $L'_B$, $W'_B$ and $L'_{AB}$ are outside of these specified ranges, the spinning property may be impaired and wear of the spinneret may be hastened.

The fin-forming slit-shaped discharge holes do not necessarily need to be uniform rectangles, and as shown in Fig. 6B, they may have arc-like swelled sections and their widths may also vary continuously.

On the other hand, if a filament having a core and fins is obtained by discharge of the polyester from a single discharge hole instead of from the two different types of discharge holes 5,6 (or 6'), the core and fins will be integrated with roughly equal orientations of the core and fins, and therefore separation of the fins by the subsequent alkali reduction treatment will tend to be more difficult.

In the spinning described above, a greater draft is applied to the polymer discharged from the fin-forming slit-shaped discharge hole than to the polymer discharged from the core-forming discharge hole, so that the fins have higher orientation than the core. In the resulting filament, therefore, there is little entangling of the molecules at the joints between the core and fins and the interfacial binding force at the joints is consequently low, such that alkali reduction treatment will preferentially separate the fins from the core. In addition, the core and fins undergo different shrinkages due to their differences in orientation, making it possible to obtain filaments with the desired bulk and soft hand.

According to the invention, the obtained filaments are subjected to alkali reduction treatment to separate at least some of the fins from the cores because this manner of separation is effective for minimizing formation of free protruding fibroid ends (fluff) by cleavage of the fins or cores. If the filaments are separated by employing physical means involving a large energy transfer, such as fluid nozzle treatment using a high pressure air flow such as exists in the prior art, a high volume of free protruding fibroid ends are formed while the fins are also split into a fibrillar form, thereby producing a woven or knitted fabric with an outer appearance similar to spun yarn and impairing the symmetry of the woven or knitted fabric.

The alkali reduction treatment may be carried out on the filaments, or their yarn or woven or knitted fabric. However, it is preferably carried out on a woven or knitted fabric. The alkali treatment conditions employed may be alkali treatment conditions for ordinary polyester filaments. Specifically, an aqueous solution of sodium hydroxide, potassium hydroxide, sodium carbonate, potassium carbonate or the like may be used, with appropriate adjustment of the concentration to 10-100 g/liter, the temperature to 40-180°C and the treatment time to between 2 minutes and 2 hours.

The separation rate S of the fins by alkali reduction treatment is preferably at least 30%, and the separation rate S of the fins of filaments positioned in a multifilament yarn surface layer is preferably larger than the separation rate S of the fins of filaments positioned in the multifilament yarn center. The separation rate S of the fins is the value defined by the following formula:

$$S(\%) = (\text{number of separated fins}/\text{total number of fins}) \times 100$$

The filaments positioned in a multifilament yarn surface layer are defined as those among the total number of multilobal filaments at a close distance from an imaginary circumscribed circle of the multifilament yarn to a range of 30% in the cross-sections of the multifilaments. Likewise, the filaments positioned at the center of the multifilament yarn are those at a close distance from the center of the imaginary circumscribed circle.

Such alkali reduction produces single fibers wherein the fins are separated from the cores, as shown in Fig. 7. Fig. 7 is a partially magnified view of modified cross-section polyester fibers from the side, wherein 4 is the single fiber, 1 is the core and 2,3 are fins protruding in a radial fashion from the core and mostly separated from the core.

In the modified cross-section polyester fibers 4 shown in Fig. 7, the fins 2,3 joined to the core 1 along the lengthwise direction of the core 1 and protruding in a radial fashion from the core 1 are separated from the core 1 by the alkali reduction treatment, producing independent fibers.

It is preferred for the fins to be continuously separated from the core 1 along the entire length of the single fiber, as the fin 2 in Fig. 7, to allow the fins to behave as independent fibers. However, it is not essential for all of the fins to be separated along the entire length of the filament, and parts thereof may be connected to the core, as shown by the fin 3.

When the fins are separated from the core 1, for example in a woven or knitted fabric, adequate gaps are provided between adjacent cores and the woven or knitted fabric therefore has satisfactory bulk (the example fiber shown in Fig. 5 has four fins for one core, but in Fig. 7 there are only two fins 2,3 for the single core).

The modified cross-section polyester fibers are preferably combined and entangled amongst themselves or with other fibers to make combined filament yarn, prepared into a woven or knitted fabric, and then subjected to alkali reduction treatment. The filaments may be combined and entangled into combined filament yarn by any publicly known method such as paralleling, doubling, air entangling or the like.

It is a fifth object of the invention to provide, in addition to the first object, modified cross-section polyester fibers which produce a silky cloth having a rough squeaky feel, an excellent bulging feel, flexibility and a lightweight feel, with no dye spots. This object is achieved by the following modified cross-section polyester fibers.

Specifically, these are modified cross-section polyester fibers comprising as the principal component a polyester polymer produced by polycondensation in the presence of the aforementioned specific catalyst, wherein the lateral cross-sectional shape is a shape comprising a triangular shaped section and a protrusion extending from one vertex of the triangular shape, where both of the following relationships (viii) and (ix) are satisfied, and having a hollow portion in the triangular shaped section constituting 3-15% thereof.

$$0.7 \leq L1/L2 \leq 3.0 \qquad \text{(viii)}$$

$$3.0 \leq h2/h1 \leq 10.0 \qquad \text{(ix)}$$

(Here, L1 represents the distance from the connection point between the triangular shaped section and the protrusion to the end of the protrusion, L2 represents the distance between the connection point between the triangular shaped section and the protrusion and the side of the triangular shaped section opposite the connection point, h1 represents the width of the protrusion and h2 represents the length of the side of the triangular shaped section opposite the connection point between the triangular shaped section and the protrusion.)

If the extending position of the protrusion differs from the vertex of the triangular shape, for example, when it extends from the center of a side of the triangular shape, the spinning property will tend to be reduced, while if the protrusion extends from multiple vertices, not only will the spinning property be reduced but the obtained cloth hand will tend to lose its silk-like quality. Also, if the shape of the protrusion is not flat, for example, if it has a shape with a round cross-section, the squeaky feel of the cloth will be less pronounced. Here, a flat shape is not necessarily uniformly flat across the entire thickness, and portions thereof may be thicker than others. In other words, the ratio (L1/h1) of the protrusion length (L1) and width (h1) described below may be 2 or greater and especially 5 or greater. If the ratio is less than 2 the shape cannot be referred to as "flat", and the obtained cloth will lack a squeaky feel and flexibility.

The direction of extension of the protrusion from the triangular shaped section is preferably at an angle within the area enclosed by extrapolated lines from the two sides of the triangular shape on either side of the vertex, and it is most preferably in the direction of the bisector of the vertex.

The present invention will now be explained in greater detail with reference to the accompanying drawings. Fig. 8 is a schematic illustration showing the lateral cross-sectional shape of modified cross-section polyester fibers. In Fig. 8, the connection point between the triangular shaped section and flat protrusion is the center point O between the two points where the outer perimeter of the triangular shaped section (A) crosses the outer perimeter of the flat protrusion

(shown as a small white circle in the drawing for convenience). The protrusion length L1 is the distance from the connection point to the end of the protrusion, and L2 is the distance between the connection point and the side of the triangular shaped section (A). When the opposite side bulges outward or recesses inward, L2 is the distance to a line parallel to the line connecting the two vertices of the triangular shape other than the connection point and tangential to the opposite site.

The width h1 of the protrusion (B) is the maximum width of the flat protrusion in the direction perpendicular to the direction of extension of the protrusion (B), while the length h2 of the opposite side is the space between two lines perpendicular to the opposite side and touching the triangular shaped section (A) .

Relational expression (viii) above defines the relationship between the size of the triangular shaped section (A) and the length of the flat protrusion (B), and since it is important for achieving an overall squeaky feel, flexibility and bulging feel for obtained cloths, L1/L2 is most preferably in the range of 1.5-2.5. If the value is less than 0.7, it will be difficult to achieve an overall squeaky feel and flexibility, while if it exceeds 3.0 it will become difficult to accomplish stable yarn making and the obtained cloth will lack a bulging feel.

Relational expression (ix) defines the relationship between the size of the triangular shaped section (A) and the width of the flat protrusion (B), and since it is important for achieving a bulging feel for obtained cloths, h2/h1 is most preferably in the range of 4.0-7.0. If the value is less than 3.0, the obtained cloth will have an insufficient bulging feel, while if it exceeds 10.0 the discharge stability during spinning will be lower, making it difficult to achieve stable yarn making.

A hollow portion with a hollow ratio of at least 3% must be present in the triangular shaped section (A) in order to impart a lightweight feel and bulging feel to cloths. However, if the hollow ratio is too large the stable yarn making property is reduced, and therefore the hollow ratio with respect to the triangular shaped section (A) is limited to no greater than 15%. The hollow ratio is more preferably in the range of 3-10%.

According to the invention, an organic sulfonic acid metal salt represented by general formula (V) below is preferably present in the polyester at 0.5-2.5 wt% with respect to the weight of the polyester, so that the alkali reduction treatment can form fine pores aligned in the direction of the fiber axes on the surfaces of the modified cross-section fibers, and yield a cloth with an enhanced dry feel and squeaky feel, and a quality very similar to tussore silk.

[Chemical Formula 9] $R^9SO_3M$ (V)

(where $R^9$ represents alkyl group having 3 to 30 carbon atoms or aryl or alkylaryl group having 7 to 40 carbon atoms, and M represents an alkali metal or alkaline earth metal.)

When $R^9$ in this formula is an alkyl or alkylaryl group, the alkyl group may be a linear or branched side group. From the viewpoint of compatibility with polyesters, R is most preferably an alkyl group, for an alkylsulfonic acid metal salt. M is preferably an alkali metal such as sodium, potassium or lithium, or an alkaline earth metal such as calcium or magnesium, among which sodium and potassium are preferred. As such organic sulfonic acid metal salts there may be mentioned specifically sodium stearylsulfonate, sodium octylsulfonate and sodium laurylsulfonate.

The modified cross-section polyester fibers may be produced, for example, by the following method.

Fig. 9 is a schematic illustration showing one example of the shape of the discharge hole of a spinneret used for production of the modified cross-section polyester fibers described above.

Specifically, the polyester is melt discharged at 280-300°C from a spinneret having the discharge hole shape described above, a lubricant is applied to the cooled and solidified spun filaments and interlacing is performed with an interlacing apparatus if necessary, after which the undrawn yarn is wound up onto a winder through a pair of take-up rollers set to room temperature. The obtained undrawn yarn is then passed through a pre-heating roller heated to 80-100°C and a non-contact heater set to 170-240°C at a drawing speed of 600-1400 m/min, for drawing to a draw ratio of 1.5-3.0, and then further interlaced if necessary.

The melt spinning temperature is preferably in the range of 275-300°C from the standpoint of spinning stability. The spinning take-up speed and draw ration are appropriately set for a polyester conjugated fiber tenacity in the range of 2.0-5.0 cN/dtex and an elongation in the range of 30-50%.

The modified cross-section polyester fibers preferably have a single fiber size of 1.5-5.0 dtex and an overall strand size of 50-170 dtex, and the boiling water shrinkage ratio is appropriately in the range of 5.0-12.0%.

For production of a cloth using the modified cross-section polyester fibers described above, appropriate twisting may be carried out as necessary, and knitting or weaving performed to the desired framework. The obtained cloth may if necessary be subjected to alkali reduction treatment to provide an excellent squeaky feel, bulging, flexibility and lightweightness which have not been obtainable with woven or knitted fabrics of the prior art.

Since the intended object is a lightweight and squeaky feel, weaving and knitting of complex frameworks are not preferred, but instead, weaving and knitting of a plain weave or variations thereof, a simple twill weave or variations thereof, a satin weave or the like is preferred. In addition, the proportion of the modified cross-section polyester fibers of the invention in the cloth does not necessarily have to be 100%, but it is preferably a large proportion in order to achieve an excellent squeaky feel, bulging, flexibility and lightweightness.

Examples

The present invention will now be explained in detail through the following examples, which are in no way limitative on the invention. The parameters for the examples were measured by the following methods.

(1) Intrinsic viscosity

This was measured at 35°C using orthochlorophenol as the solvent.

(2) Softness

An organoleptic evaluation was conducted by touch, with judgment as 3: soft and very satisfactory, 2: satisfactory or 1: rough/hard and unsatisfactory.

(3) Anti-penetration property

The L value was measured, and ΔL was calculated as the L value when using a white sheet minus the L value when using a black sheet. A lower value was judged as an excellent anti-penetration property.

(4) Air permeability

This was measured according to Air Permeability Method A of JIS L-1096-79-6.27, using a Frazil-type air permeability tester.

(5) Water absorption

This was measured by the "Byreck method" of JIS1096.

(6) Wear resistance

After rubbing 3000 times with a Martindale Abrasion Tester, cloths exhibiting no wear were judged as good, and those exhibiting wear were judged as poor.

(7) Titanium element content, phosphorus element content

A sample of the particulate polyester was heated to a melt on an aluminum plate and then supplied to a compression press and formed into a level molded test article, and the sample was supplied to a Model 3270E fluorescent X-ray analyzer by Rigaku Corp. for measurement of the titanium element content and phosphorus element content.

(8) (L*-b*) value

The polyester fiber was knitted to a 30 cm long tube knit with a 12-gauge circular knitting machine, after which a Macbeth COLOR EYE color measurement device was used for measurement of the L* value and b* value, and the difference (L*-b*) was determined.

(9) Fluff count (/$10^6$ m)

Upon placing 250 package-wound (or pirn-wound) polyester fibers through a warping machine equipped with a fluff detector, the yarns were warped and drawn for 42 hours at a speed of 400 m/min. The warping machine was periodically shut down and the presence of fluff visually confirmed, and the total confirmed fluff count was calculated per $10^6$ m of the strand length and recorded as the fluff count.

Example 1

Preparation of titanium compound:

A 2 L three-necked flask equipped with a function allowing mixing and stirring of the contents was prepared, 919 g of ethylene glycol and 10 g of acetic acid were placed therein, and after stirring and mixing, 71 g of titanium

tetrabutoxide was slowly added to obtain a (transparent) solution of a titanium compound in ethylene glycol. This solution will hereinafter be abbreviated as "TB solution". The titanium atom concentration of the solution was 1.02%.

Preparation of phosphorus compound:

A 2 L three-necked flask equipped with a function allowing heating, mixing and stirring of the contents was prepared, and 656 g of ethylene glycol was placed therein and heated to 100°C while stirring. Upon reaching 100°C, 34.5 g of monolauryl phosphate was added, and the mixture was heated, mixed and stirred to dissolution to obtain a transparent solution. This solution will hereinafter be abbreviated as "P1 solution".

Preparation of catalyst:

Next, 310 g of the prepared TB solution was slowly added to the P1 solution (approximately 690 g) under heating control at 100°C and stirring, and upon addition of the entire amount, stirring was continued for 1 hour at a temperature of 100°C to complete reaction of the titanium compound and phosphorus compound. The mixing ratio of the TB solution and P1 solution was 2.0 as the molar ratio of phosphorus atoms with respect to titanium atoms. The product obtained by the reaction was insoluble in ethylene glycol and was therefore present as a turbid, fine precipitate. This solution will hereinafter be abbreviated as "TP1-2.0 catalyst".

In order to analyze the obtained reaction precipitate, a portion of the reaction solution was filtered with a 5 μ pore filter to obtain the precipitated reaction product as a solid, and it was then washed with water and dried. The elemental concentration of the obtained precipitated reaction product was analyzed by XMA, yielding results of 12.0% titanium, 16.4% phosphorus and a phosphorus atom molar ratio of 2.1 with respect to titanium atoms. Solid NMR analysis yielded the following results. C-13 CP/MAS (75.5 Hz frequency) measurement revealed disappearance the butoxide-derived chemical shift peaks at 14 ppm, 20 ppm and 36 ppm for titanium tetrabutoxide, while P-31 DD/MAS (121.5 Hz frequency) measurement confirmed a new chemical shift peak at 22 ppm not found in conventional monolauryl phosphate. These data clearly indicated that the precipitate obtained under these conditions was a new compound resulting from reaction of the titanium compound and phosphorus compound.

Separately, a slurry prepared by mixing 179 parts by mass of high purity terephthalic acid and 95 parts by mass of ethylene glycol was supplied at a constant rate to a reactor already holding 225 parts by mass of an oligomer while stirring in a nitrogen atmosphere under conditions kept at 255°C, ordinary pressure, and esterification reaction was carried out for 4 hours to completion while removing out of the system the water and ethylene glycol generated by the reaction. The esterification rate was >98% and the polymerization degree of the produced oligomer was about 5-7.

After transferring 225 parts by mass of the oligomer obtained by the esterification reaction to a polycondensation reactor, 3.34 parts by mass of the "TP1-2.0 catalyst" produced earlier was charged in as the polycondensation catalyst. The reaction temperature in the system was raised from 255°C to 280°C and the reaction pressure lowered from atmospheric pressure to 60 Pa in stages, for polycondensation reaction while removing out of the system the water and ethylene glycol generated by the reaction.

The extent of the polycondensation reaction was confirmed while monitoring the load on the stirring blade in the system, and the reaction was suspended when the desired degree of polymerization was reached. During the reaction, titanium dioxide was added as a delustering agent at 2.5 wt% based on the total weight of the polyester. The reaction product in the system was then continuously extruded into a strand from the discharge port and then cooled and cut to obtain granular pellets of approximately 3 mm. The intrinsic viscosity of the obtained polyethylene terephthalate was 0.62.

The polyethylene terephthalate pellets were spun from a spinneret having 36 discharge holes each producing the single filament cross-sectional shape shown in Fig. 1 at a spinning temperature of 290°C, and after application of a lubricant and take-up at a speed of 3000 m/min, drawing was performed, without winding up, at a pre-heating temperature of 85°C, a heat setting temperature of 120°C and a draw ratio of 1.67, and the filaments were wound up at a speed of 5000 m/min to obtain multifilaments comprising flat cross-sectional filaments according to the invention, with a single filament size of 2.4 dtex and an overall strand size of 86 dtex. The obtained multifilaments were woven, without twisting of the warp or weft, into a plain weave with a weaving density of 110 strands/2.54 cm and then dyed by an established method, and the obtained cloth was evaluated by the methods described above. The results are shown in Table 1.

Examples 2-3, Comparative Example 1

The same procedure was carried out as in Example 1, except that the spinneret was replaced for discharge holes to produce the shapes shown in Fig. 1(b) and (c) and a round single filament cross-sectional shape. The results are shown in Table 1.

Comparative Example 2

The same procedure was carried out as in Example 1, except that the polycondensation catalyst was changed to a 1.3% solution of antimony trioxide in ethylene glycol, the charged amount was 4.83 parts by mass, and there was further charged 0.121 part by mass of a 25% solution of trimethyl phosphate in ethylene glycol as a stabilizer. The results are shown in Table 1.

Comparative Example 3

The same procedure was carried out as in Example 1, except that the TB solution prepared in Example 1 alone was used as the polycondensation catalyst, and the charged amount was 1.03 parts by mass. The results are shown in Table 1.

Table 1

| | Example 1 | Example 2 | Example 3 | Comp. Ex. 1 | Comp. Ex. 2 | Comp. Ex. 3 |
|---|---|---|---|---|---|---|
| Cross-sectional shape | (a) | (b) | (c) | round | (b) | (b) |
| Flatness | 3 | 3.7 | 4.5 | - | 3.7 | 3.7 |
| Irregularity | 2 | 2 | 2 | - | 2 | 2 |
| Softness | 2 | 3 | 3 | 1 | 2 | 2 |
| Sticky feel | none | none | none | none | none | none |
| Anti-penetration (ΔL) | 13.5 | 12.0 | 11.0 | 15.0 | 12.0 | 11.0 |
| Air permeability | 2.0 | 1.2 | 1.1 | 6.8 | 1.2 | 1.5 |
| Water absorption | 50 | 55 | 50 | 20 | 55 | 50 |
| Wear resistance | good | good | good | good | good | poor |
| L*-b* | 76 | 77 | 73 | 70 | 59 | 50 |
| Fluff (/$10^6$ m) | 0.04 | 0.05 | 0.05 | 0.05 | 2.70 | 0.80 |

Example 4

After charging 0.009 part by mass of tetra-n-butyl titanate (TBT) into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.035 part by mass of triethyl phosphonoacetate (TEPA) was added to terminate the transesterification reaction.

The reaction product was then transferred to a polymerization reactor, the temperature was raised to 290°C, and polycondensation reaction was conducted in a high vacuum of no greater than 26.67 Pa to obtain polyethylene terephthalate. During the reaction, titanium dioxide was added as a delustering agent at 2.5 wt% based on the total weight of the polyester. The intrinsic viscosity of the polyethylene terephthalate was 0.62 and the diethylene glycol content was 1.5%. The obtained polyethylene terephthalate was also pelleted by an ordinary method.

The polyethylene terephthalate pellets were spun from a spinneret having 36 discharge holes each producing the single filament cross-sectional shape shown in Fig. 1 at a spinning temperature of 290°C, and after application of a lubricant and take-up at a speed of 3000 m/min, drawing was performed, without winding up, at a pre-heating temperature of 85°C, a heat setting temperature of 120°C and a draw ratio of 1.67, and the filaments were wound up at a speed of 5000 m/min to obtain multifilaments comprising flat cross-sectional filaments according to the invention, with a single filament size of 2.4 dtex and an overall strand size of 86 dtex. The obtained multifilaments were woven, without twisting of the warp or weft, into a plain weave with a weaving density of 110 strands/2.54 cm and then dyed by an established method, and the obtained cloth was evaluated by the methods described above. The results are shown in Table 2.

Examples 5-6, Comparative Example 4

The same procedure was carried out as in Example 4, except that the spinneret was replaced for discharge holes to produce the shapes shown in Fig. 1(b) and (c) and a round monofilament cross-sectional shape. The results are shown in Table 2.

Comparative Example 5

After charging 0.064 part by mass of calcium acetate monohydrate into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.044 part by mass of a 56 wt% aqueous phosphoric acid solution was added to terminate the transesterification reaction.

The reaction product was then transferred to a polymerization reactor, diantimony trioxide was added in the amount shown in the table, the temperature was raised to 290°C, and polycondensation reaction was conducted in a high vacuum of no greater than 26.67 Pa to obtain polyethylene terephthalate. Titanium dioxide was added during the reaction in the same manner as Example 4. The polyethylene terephthalate was also pelleted by an ordinary method.

The same procedure was carried out as in Example 4 except for using these polyethylene terephthalate pellets. The results are shown in Table 2.

Table 2

| | | Example 4 | Example 5 | Example 6 | Comp. Ex. 4 | Comp. Ex. 5 |
|---|---|---|---|---|---|---|
| Ti compound | Type | TBT | TBT | TBT | TBT | - |
| | Content (mmol%) | 5 | 5 | 5 | 5 | - |
| P compound | Type | TEPA | TEPA | TEPA | TEPA | - |
| | Content (mmol%) | 30 | 30 | 30 | 30 | - |
| Sb compound | Type | - | - | - | - | $Sb_2O_3$ |
| | Content (mmol%) | - | - | - | - | 31 |
| P/Ti | | 6 | 6 | 6 | 6 | - |
| P+Ti | | 35 | 35 | 35 | 35 | - |
| Cross-sectional shape | | (a) | (b) | (c) | round | (b) |
| Flatness | | 3 | 3.7 | 4.5 | - | 3.7 |
| Irregularity | | 2 | 2 | 2 | - | 2 |
| Softness | | 2 | 3 | 3 | 1 | 2 |
| Sticky feel | | None | none | none | none | none |
| Anti-penetration ($\Delta L$) | | 13.0 | 12.3 | 11.2 | 16.5 | 12.0 |
| Air permeability | | 2.1 | 1.4 | 1.2 | 7.0 | 1.2 |
| Water absorption | | 52 | 57 | 52 | 16 | 55 |
| Wear resistance | | Good | good | good | good | good |
| L*-b* | | 78 | 78 | 74 | 71 | 58 |
| Fluff (/$10^6$ m) | | 0.03 | 0.04 | 0.02 | 0.04 | 3.10 |

The present invention will now be further explained by Examples 7-12 and Comparative Examples 6-7. The parameters for these examples and comparative examples were measured by the following methods.

(1) Crystallinity

This was determined by wide-angle X-ray diffraction. An X-ray emitter (Rotorflex RU-200) by Rigaku Corp. was used for measurement of the scattering intensity of Cu-K$\alpha$ rays monochromatized with a nickel filter, and the crystallinity was calculated by the following formula.

Crystallinity = Scattering intensity of crystalline portion/total scattering intensity x 100 (%)

(2) Boiling water shrinkage ratio

A skein with 20 turns was prepared using a sizing reel with a frame perimeter of 1.125 m, and after applying a load of 0.022 cN/dtex, the skein was hung on a scale board and the initial skein length $L_0$ was measured. Next, the skein was treated for 30 minutes in a hot water bath at 65°C and then cooled and again hung on a scale board, upon which the length L after shrinkage was measured, and the boiling water shrinkage ratio was calculated by the following formula.

$$\text{Boiling water shrinkage ratio} = (L_0 - L)/L_0 \times 100\ (\%)$$

(3) Protrusion coefficient

A cross-sectional micrograph was taken of the polyester multifilament, the length ($a_1$) from the center of an inscribed circle in the inner wall of a single fiber cross-section to the tip of the fin and the radius ($b_1$) of the inscribed circle in the inner wall of the fiber cross-section were measured, and the protrusion coefficient was calculated by the following formula.

$$\text{Protrusion coefficient} = (a_1 - b_1)/a_1$$

(4) Titanium element content, phosphorus element content

A sample of the particulate polyester was heated to a melt on an aluminum plate and then supplied to a compression press and formed into a level molded test article, and the sample was supplied to a Model 3270E fluorescent X-ray analyzer by Rigaku Corp. for measurement of the titanium element content and phosphorus element content.

(5) Height of spinneret accumulation

After melt spinning with the method and conditions described in each example, a release agent was blown onto the spinneret surface, the spinneret was detached while avoiding adhesion of the discharge polymer, and the height of spinneret accumulation which had adhered and accumulated around the discharge hole was measured using a microscope. The heights of spinneret accumulation of all of the discharge holes were measured, and their average value was recorded.

(6) Spinning yarn breakage (%)

The number of spinning yarn breaks during operation of the spinning machine, excluding yarn breaks due to artificial or mechanical factors, was recorded and the spinning yarn breakage was calculated by the following formula.
Spinning yarn breakage (%) = [number of yarn breaks/(operating winder number x doffing number)] x 100 Here, the doffing number is the number of times the undrawn yarn package was wound up to a prescribed weight (10 kg).

(7) Working yarn breakage

A 10 kg wound polyester multifilament package was draw-false twisted using an SDS-8 draw-false twisting machine by Scragg Co. to prepare two 5 kg wound polyester false twisted yarn packages, the number of yarn breaks during the operation was recorded, and the working yarn breakage was calculated by the following formula.

$$\text{Working yarn breakage} = \text{Number of yarn breaks}/(\text{number of operating spindles} \times 2) \times 100$$

(8) Working fluff

A DT-104 Fluff Counter by Toray Co., Ltd. was used to determine the count of fluffs generated in the false twisted yarn upon 20 minutes of continuous measurement at a speed of 50 m/min.

(9) Fabric hand

Draw-false twist yarn was twisted at 600 turns/m and used as warp and weft yarn to prepare a twill weave fabric. The fabric was then subjected to scouring and relaxation treatment at 100°C, presetting dry heat treatment at 180°C for 45 seconds, 15% alkali reduction treatment and dyeing at 130°C for 30 minutes and naturally dried, after which final setting was performed at 170°C for 45 seconds to prepare a woven fabric. The fabric was judged for feel by an examiner and graded on the following scale.

Level 1: Natural, dry feel
Level 2: Dry feel somewhat lacking
Level 3: Flat, paper-like feel

(10) Water absorption/quick-drying property (wicking value)

The index used for the water absorption and quick-drying performance was the number of seconds until dropped water droplets no longer were reflected from the surface of a test fabric made of polyester false twisted yarn (wicking number), based on 5.1.1 Speed of Water Absorption (dropping method) in the water absorption test method for fiber products according to JIS L1907. $L_{10}$ represents the wicking value (sec) after washing 10 times by the method of JIS L0844-A-2.

(11) (L*-b*) value

The polyester fiber was knitted to a 30 cm long tube knit with a 12-gauge circular knitting machine, after which a CR-200 Hunter-type differential colorimeter by Minolta was used for measurement of the L* value and b* value, and the difference (L*-b*) was determined.

<u>Examples 7-9</u>

Preparation of a titanium compound, phosphorus compound and catalyst and production of an oligomer were carried out in the same manner as Example 1.

After transferring 225 parts by mass of the obtained oligomer to a polycondensation reactor, 3.34 parts by mass of the "TP1-2.0 catalyst" produced earlier was charged in as the polycondensation catalyst. The reaction temperature in the system was then raised from 255°C to 280°C and the reaction pressure was lowered from atmospheric pressure to 60 Pa in stages, for polycondensation reaction while removing out of the system the water and ethylene glycol generated by the reaction.

The extent of the polycondensation reaction was confirmed while monitoring the load on the stirring blade in the system, and the reaction was suspended when the desired degree of polymerization was reached. The reaction product in the system was then continuously extruded into a strand from the discharge port and then cooled and cut to obtain granular pellets of approximately 3 mm. The intrinsic viscosity of the obtained polyethylene terephthalate was 0.630.

Separately, a spinneret was prepared beforehand based on a type of discharge hole with the discharge hole shape shown in Fig. 4, having 24 discharge hole groups each consisting of a core-forming round discharge hole ($b_2$ in Fig. 4) with a radius of 0.15 mm and fin-forming discharge holes with a slit width of 0.10 mm and a length of 0.88 mm from the center of the round discharge hole to the tip ($a_2$ in Fig. 4) in the number shown in Table 1, and it was incorporated into a spin pack and packed into a spin block. The aforementioned polyethylene terephthalate pellets were dried at 150°C for 5 hours and then melted with a melt spinning apparatus equipped with a screw-type extruder, introduced into the spin block at 295°C, and extruded from the spinneret at a discharge rate of 40 g/min. Next, cooling air at 25°C was blown into the polymer flow at a proportion of 5 $Nm^3$/min from a cross-flow type spinning stack with a length of 60 cm situated with its top 10 cm below the spinneret discharge plane, for cooling to solidification, after which a spinning lubricant was applied and the filament was wound up at a speed of 3000 m/min to obtain polyethylene terephthalate filaments each having the crystallinity, boiling water shrinkage ratio, number of fins and protrusion coefficient shown in Table 3. This melt spinning procedure was carried out continuously for 7 days.

The obtained polyethylene terephthalate filaments were supplied to an SDS-8 draw-false twisting machine by Scragg Co. (triple-axle disc false twisting unit, 216 spindles), for draw-false twisting at a draw ratio of 1.65, a heater temperature of 175°C, a twist number of 3300/m and a draw-false twisting speed of 600 m/min, to obtain polyethylene terephthalate draw-false twisted yarn with a size of 84 dtex. The wicking values ($L_0$ and $L_{10}$), fabric hands, working yarn breakages and working fluff counts for Examples 1-3 and Comparative Example 1 are summarized in Table 3.

Comparative Example 6

The same procedure was carried out as in Example 8, except that the polycondensation catalyst was changed to a 1.3% solution of antimony trioxide in ethylene glycol, the charged amount was 4.83 parts by mass, and there was further charged 0.121 part by mass of a 25% solution of trimethyl phosphate in ethylene glycol as a stabilizer. The results are shown in Table 3.

Table 3

| | Example 7 | Example 8 | Example 9 | Comp. Ex. 6 |
|---|---|---|---|---|
| Polymerization catalyst | Reaction product of titanium tetrabutoxide and monolauryl Phosphate | Reaction product of titanium tetrabutoxide and monolauryl phosphate | Reaction product of titanium tetrabutoxide and monolauryl phosphate | $Sb_2O_3$ |
| Mixing proportion of titanium compound and phosphorus compound in polymerization catalyst*1 | 2.0 | 2.0 | 2.0 | - |
| Number of fins | 3 | 4 | 6 | 4 |
| Protrusion coefficient | 0.51 | 0.48 | 0.48 | 0.48 |
| Crystallinity (%) | 21 | 22 | 22 | 20 |
| Boiling water shrinkage ratio (%) | 59 | 56 | 55 | 57 |
| Wicking value<br>$L_0$ (sec)<br>$L_{10}$ (sec) | <br>0<br>10 | <br>0<br>3 | <br>0<br>7 | <br>0<br>11 |
| Height of spinneret accumulation after 7 days of spinning (μm) | 3.0 | 2.5 | 3.7 | 89 |
| Spinning yarn breakage during 7 days (%) | 0.3 | 0.5 | 1.0 | 5.4 |
| Fluff count (/$10^4$ m) | 2 | 3 | 1 | 31 |
| Draw-false twisting yarn breakage (%) | 3.2 | 3.4 | 4.2 | 25.4 |
| (L*-b*) | 88 | 97 | 95 | 92 |
| Grading of fabric hand | Level 1 | Level 1 | Level 1 | Level 1 |
| *1: Molar ratio of phosphorus atoms with respect to titanium atoms. | | | | |

Examples 10-11

After charging 0.009 part by mass of tetra-n-butyl titanate (TBT) into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.035 part by mass of triethyl phosphonoacetate (TEPA) was added to terminate the transesterification reaction.

The reaction product was then transferred to a polymerization reactor, the temperature was raised to 290°C, and polycondensation reaction was conducted in a high vacuum of no greater than 26.67 Pa, to obtain polyethylene terephthalate with an intrinsic viscosity of 0.630 and a diethylene glycol content of 1.5%. The obtained polyethylene terephthalate was then pelleted according to a common method.

Separately, a spinneret was prepared beforehand based on a type of discharge hole with the discharge hole shape shown in Fig. 4, having 24 discharge hole groups each consisting of a core-forming round discharge hole ($b_2$ in Fig. 4) with a radius of 0.15 mm and fin-forming discharge holes with a slit width of 0.10 mm and a length of 0.88 mm from the center of the round discharge hole to the tip ($a_2$ in Fig. 4) in the number shown in Table 1, and it was incorporated into a spin pack and packed into a spin block. The aforementioned polyethylene terephthalate pellets were dried at 150°C for 5 hours and then melted with a melt spinning apparatus equipped with a screw-type extruder, introduced into the spin block at 295°C, and extruded from the spinneret at a discharge rate of 40 g/min. Next, cooling air at 25°C was blown into the polymer flow at proportion of 5 $Nm^3$/min from a cross-flow type spinning stack with a length of 60 cm situated with its top 10 cm below the spinneret discharge plane, for cooling to solidification, after which a spinning lubricant was applied and the filament was wound up at a speed of 3000 m/min to obtain polyethylene terephthalate filaments each having the crystallinity, boiling water shrinkage ratio, number of fins and protrusion coefficient shown in Table 4. This melt spinning procedure was carried out continuously for 7 days.

The obtained polyethylene terephthalate filaments were supplied to an SDS-8 draw-false twisting machine by Scragg Co. (triple-axle disc false twisting unit, 216 spindles), for draw-false twisting at a draw ratio of 1.65, a heater temperature of 175°C, a twist number of 3300/m and a draw-false twisting speed of 600 m/min, to obtain polyethylene terephthalate draw-false twisted yarn with a size of 84 dtex. The wicking values ($L_0$ and $L_{10}$) , fabric hands, working yarn breakages and working fluff counts for Examples 1-3 and Comparative Example 1 are summarized in Table 4.

<u>Comparative Example 7</u>

After charging 0.064 part by mass by weight of calcium acetate monohydrate into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.044 part by mass of a 56 wt% aqueous phosphoric acid solution was added to terminate the transesterification reaction.

The reaction product was then transferred to a polymerization reactor, diantimony trioxide was added in the amount shown in the table, the temperature was raised to 290°C, and polycondensation reaction was conducted in a high vacuum of no greater than 26.67 Pa to obtain polyethylene terephthalate with an intrinsic viscosity of 0.630. The obtained polyethylene terephthalate was then pelleted according to a common method.

The same procedure was carried out as in Example 2, except for using these polyethylene terephthalate pellets. The results are shown in Table 4.

Table 4

| | | Example 10 | Example 11 | Example 12 | Comp. Ex. 7 |
|---|---|---|---|---|---|
| Ti compound | Type | TBT | TBT | TBT | - |
| | Content (mmol%) | 5 | 5 | 5 | - |
| P compound | Type | TEPA | TEPA | TEPA | - |
| | Content (mmol%) | 30 | 30 | 30 | - |
| Sb compound | Type | - | - | - | $Sb_2O_3$ |
| | Content (mmol%) | - | - | - | 31 |
| P/Ti | | 6 | 6 | 6 | - |
| P+Ti (mmol%) | | 35 | 35 | 35 | - |
| Number of fins | | 3 | 4 | 6 | 4 |
| Protrusion coefficient | | 0.51 | 0.48 | 0.48 | 0.48 |
| Crystallinity (%) | | 24 | 25 | 25 | 20 |
| Boiling water shrinkage ratio (%) | | 53 | 52 | 52 | 57 |
| Wicking value<br>$L_0$ (sec)<br>$L_{10}$ (sec) | | <br>0<br>8 | <br>0<br>4 | <br>0<br>6 | <br>0<br>11 |
| Height of spinneret accumulation after 7 days of spinning (μm) | | 5.4 | 3.6 | 8.1 | 89 |

(continued)

| | Example 10 | Example 11 | Example 12 | Comp. Ex. 7 |
|---|---|---|---|---|
| Spinning yarn breakage during 7 days (%) | 1.4 | 0.3 | 2.5 | 5.4 |
| Fluff count (/$10^4$ m) | 1 | 1 | 0 | 31 |
| Draw-false twisting yarn breakage (%) | 3.5 | 3.9 | 4.0 | 25.4 |
| (L*-b*) | 90 | 96 | 91 | 88 |
| Grading of fabric hand | Level 1 | Level 1 | Level 1 | Level 1 |

The present invention will now be further explained by Examples 13-34 and Comparative Examples 8-11. The parameters for these examples and comparative examples were measured by the following methods.

(1) Cross-sectional shape of filaments

The core cross-sectional area ($S_A$) and diameter ($D_A$) and the fin cross-sectional area ($S_B$) and maximum length and maximum width ($W_B$) were determined by observation of a 3000x magnification photograph of the filament cross-section before alkali reduction.

(2) Spinning property

Spinning was carried out continuously for 8 hours, and was judged as "A" if absolutely no yarn breakage occurred, "B" if single filament breakage (fluff) occurred and "C" if yarn breakage occurred.

(3) Fin separation (S)

The number of separated fins was determined by observation of a 1000x magnification photograph of the filament after alkali reduction treatment, and the separation rates S(%) of the fins in the multifilament yarn surface layer portion and center portion were calculated by the following formula.

$$S(\%) = (\text{number of separated fins/total number of fins}) \times 100$$

(4) Woven/knitted fabric hand

The bulk, soft feel and drape property of the woven or knitted fabric were assigned an overall organoleptic evaluation on a scale of A (very good) to E (poor).

(5) Compatibility parameter $\chi$

The solubility parameters δa and δb of the polyester and of the compound in microphase separation with the polyester were determined from their solubilities in different solvents, and $\chi$ was determined by the following formula.

$$\chi = (V_a/RT)(\delta a - \delta b)^2$$

(where $V_a$ represents the molar volume ($cm^3$/mol) of the polyester, R represents the gas constant (J/mol·K), T represents the absolute temperature (K) and δa and δb represent the solubility parameters ($J^{1/2}/cm^{3/2}$) of the polyester and compound, respectively)

(6) Height of spinneret accumulation

After melt spinning with the method and conditions described in each example, a release agent was blown onto the spinneret surface, the spinneret was detached while avoiding adhesion of the discharge polymer, and the height

of spinneret accumulation which had adhered and accumulated around the discharge hole was measured using a microscope. The heights of spinneret accumulation were measured for all of the discharge holes, and their average value was recorded.

Examples 13-21

To a stirred mixture of 919 g of ethylene glycol and 10 g of acetic acid there was added 71 g of titanium tetrabutoxide to obtain a (transparent) solution of a titanium compound in ethylene glycol. After then adding 34.5 g of monolauryl phosphate to 656 g of ethylene glycol heated and stirred at 100°C, heating and stirring were continued for mixture to dissolution to obtain a transparent solution.

Next, both solutions were mixed by stirring at 100°C, and after adding the entire amounts, the resulting mixture was stirred at a temperature of 100°C for 1 hour to obtain a turbid solution. The mixing ratio of the two solutions was adjusted for a phosphorus atom molar ratio of 2.0 with respect to titanium atoms. The obtained white precipitate was filtered out and then washed with water and dried as the polymerization catalyst.

A slurry prepared by mixing 179 parts by mass of high-purity terephthalic acid and 95 parts by mass of ethylene glycol was supplied at a constant rate into a reactor capable of holding 225 parts by mass of oligomer while stirring in a nitrogen atmosphere and maintaining conditions of 255°C, ordinary pressure, and esterification reaction was conducted while distilling out of the system the water and ethylene glycol generated by the reaction, until completion of the reaction. The esterification rate was ≥98%, and the polymerization degree of the produced oligomer was approximately 5-7.

After transferring 225 parts by mass of the oligomer obtained by the esterification reaction into a polycondensation reactor, 3.34 parts by mass of the catalyst prepared above was charged in as the polycondensation catalyst and a compound for microphase separation with the polyester was added and mixed therewith, after which the pressure was further reduced to 1 mmHg for polymerization according to the common method described below, and pellets were cut to obtain particles of polyethylene terephthalate with an intrinsic viscosity of 0.63 (hereinafter referred to as "polyethylene terephthalate chips"). The added and mixed compounds, the $\chi$ values of the compounds and their addition amounts are shown in Table 5.

These polyethylene terephthalate chips were melt discharged at 275°C from a spinneret provided with 24 sets of discharge holes having the shape shown in Fig. 6B, and cooling was accomplished in a cross-blowing spinning stack while joining the obtained cores and fins, followed by winding up at a speed of 1000 m/min.

The wound up filament yarn was subjected to drawing heat treatment at a draw ratio of 2.55 using a drawing machine equipped with a 90°C hot roller and a 150°C slit heater, to obtain 60 dtex/24 filament yarn.

The obtained filament yarn was formed into a 20 gauge tube-knit fabric, and the tube-knit fabric was boiled for 20 minutes in a 40 g/liter aqueous sodium hydroxide solution for alkali reduction treatment.

The spinning property, height of spinneret accumulation, fabric hand, etc. for each example are shown in Table 5.

Comparative Examples 8, 9

Polyethylene terephthalate chips were produced in the same manner as Examples 15 and 18, except for using antimony trioxide as the polymerization catalyst, and these were used to produce filament yarn for Comparative Examples 8 and 9. The spinning property, height of spinneret accumulation, fabric hand, etc. for each example are shown in Table 5.

Table 5

| | Compound | $\chi$ | Addition amount (wt%) | Number of fins | $S_B/S_A$ | $L_B/D_A$ | $W_B/D_A$ | Spinning property | Accumulation height ($\mu$m) | Fin separation | | Fabric hand |
|---|---|---|---|---|---|---|---|---|---|---|---|---|
| | | | | | | | | | | Surface layer section (%) | Center section (%) | |
| Example 13 | PEG | 0.08 | 3.0 | 4 | 1/4 | 1.0 | 1/5 | A | 12 | 62 | 44 | B |
| Example 14 | PEG | 0.08 | 3.0 | 6 | 1/4 | 0.8 | 1/5 | A | 9 | 66 | 47 | A |
| Example 15 | $C_{16}H_{31}$-grafted PEG | 0.25 | 3.0 | 4 | 1/4 | 1.0 | 1/5 | A | 10 | 72 | 51 | A |
| Example 16 | PE(30)-PMMA (70) copolymer | 0.33 | 3.0 | 4 | 1/4 | 1.0 | 1/5 | A | 13 | 78 | 59 | A |
| Example 17 | PE(90)-PMMA (10) copolymer | 1.3 | 3.0 | 4 | 1/4 | 1.0 | 1/5 | A | 12 | 89 | 68 | A |
| Example 18 | PE | 2.2 | 3.0 | 4 | 1/4 | 1.0 | 1/5 | A | 14 | 70 | 52 | B |
| Example 19 | PMMA | 2.3 | 3.0 | 4 | 1/4 | 1.0 | 1/5 | A | 21 | 71 | 54 | B |
| Example 20 | $C_{16}H_{31}$-grafted PEG | 0.25 | 0.3 | 4 | 1/4 | 1.0 | 1/5 | A | 17 | 63 | 41 | B |
| Example 21 | $C_{16}H_{31}$-grafted PEG | 0.25 | 4.0 | 4 | 1/3 | 1.5 | 1/4 | A | 15 | 79 | 60 | A |
| Comp. Ex. 8 | $C_{16}H_{31}$-grafted PEG | 0.25 | 3.0 | 4 | 1/4 | 1.0 | 1/5 | B | 55 | 70 | 53 | A |
| Comp. Ex. 9 | PE | 2.2 | 3.0 | 4 | 1/4 | 1.0 | 1/5 | C | 61 | 71 | 53 | B |

Examples 22, 23

For Example 22, filament yarn A obtained in Example 15 and a 40 dtex/18 filament yarn B obtained by melt discharging polyethylene terephthalate chips from a spinneret provided with 18 sets of flat discharge holes (L/D = 5), winding up at 1500 m/min and then drawing at a preheating temperature of 90°C and a draw ratio of 2.7, were entangled with an interlace nozzle at an air pressure of 1.5 $kg/cm^2$ and an overfeed rate of 1.5%, to produce combined filament yarn.
This combined filament yarn was twisted at S300T/M and used as warp yarn and weft yarn for weaving of a habutae woven fabric. After relaxation treatment, the fabric was heat set and then subjected to 20% alkali reduction treatment. Table 6 shows the shrinkage ratios and combination ratio for filament yarn A and filament yarn B, as well as the fin separation in the woven fabric and the fabric hand.
For Example 23, polyethylene terephthalate chips with an intrinsic viscosity of 0.64 containing titanium oxide at 0.05 wt% as a delustering agent were melt discharged at 275°C from a spinneret provided with 24 sets of discharge holes each having the shape shown in Fig. 6B, and cooling was accomplished in a cross-blowing spinning stack while joining the discharged cores and fins, followed by winding up at a speed of 2500 m/min, and after subsequent drawing at a preheating temperature of 90°C and a draw ratio of 1.8, relaxation heat treatment was carried out using a non-contact heater at 150°C with an overfeed rate of 2% to obtain a 60 dtex/24 filament yarn A.
Separately, the polyethylene terephthalate chips were melt discharged from a spinneret having 18 round discharge holes, wound up at 1500 m/min and drawn at a preheating temperature of 90°C and a draw ratio of 3.0 to obtain a 40 dtex/18 filament yarn B.
The filament yarn A and filament yarn B were combined and used for weaving and alkali reduction treatment by the same methods as in Example 23.
Table 6 shows the shrinkage ratios and combination ratio for filament yarn A and filament yarn B obtained in Examples 22 and 23, as well as the fin separation in the resulting woven fabric and the fabric hand. The combination ratio is the ratio of filament yarn A combined with respect to the entire combined filament yarn (weight of filament yarn A + weight of filament yarn B).

Table 6

| | Filament A | | | Filament B | Fin separation | | Fabric hand |
|---|---|---|---|---|---|---|---|
| | Boiling water shrinkage ratio (%) | Dry heat shrinkage ratio (%) | Combination ratio (%) | Boiling water shrinkage ratio (%) | Surface layer section (%) | Center section (%) | |
| Example 22 | 8 | 0.5 | 60 | 8 | 53 | 38 | B |
| Example 23 | 6 | -5 | 54 | 6 | 52 | 37 | A |

Examples 24-32

After charging 0.009 part by mass of tetra-n-butyl titanate (TBT) into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.035 part by mass of triethyl phosphonoacetate (TEPA) was added to terminate the transesterification reaction. Here, $M_P/M_{Ti}$ = 3, $M_P + M_{Ti}$ = 35.
The reaction product was then transferred to a polymerization reactor, the temperature was raised to 290°C, and polycondensation reaction was conducted in a high vacuum of no greater than 26.67 Pa to obtain polyethylene terephthalate having an intrinsic viscosity of 0.63 and a diethylene glycol content of 1.5%. The obtained polyethylene terephthalate was formed into chips by an ordinary method.
The polyethylene terephthalate chips were melt discharged at 275°C from a spinneret provided with 24 sets of discharge holes having the shape shown in Fig. 6B, and cooling was accomplished in a cross-blowing spinning stack while joining the discharged cores and fins, followed by winding up at a speed of 1000 m/min.
The wound up filament yarn was subjected to drawing heat treatment at a draw ratio of 2.55 using a drawing machine equipped with a 90°C hot roller and a 150°C slit heater, to obtain 60 dtex/24 filament yarn.
The obtained filament yarn was formed into a 20 gauge tube-knit fabric, and the tube-knit fabric was boiled for

20 minutes in a 40 g/liter aqueous sodium hydroxide solution for alkali reduction treatment.

The spinning property, height of spinneret accumulation, fabric hand, etc. for each example are shown in Table 7.

Comparative Examples 10, 11

After charging 0.064 part by mass by weight of calcium acetate monohydrate into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.044 part by mass of a 56 wt% aqueous phosphoric acid solution was added to terminate the transesterification reaction.

The reaction product was then transferred to a polymerization reactor, diantimony trioxide was added in the amount shown in the table, the temperature was raised to 290°C, and polycondensation reaction was conducted in a high vacuum of no greater than 26.67 Pa to obtain polyethylene terephthalate. The obtained polyethylene terephthalate was formed into chips by an ordinary method.

Filament yarn was produced in the same manner as Examples 26 and 29, except for using the above-mentioned polyethylene terephthalate chips, and these were used for Comparative Examples 10 and 11. The spinning property, height of spinneret accumulation, fabric hand, etc. for each example are shown in Table 7.

Table 7

| | Compound | Ti compound | | P compound | | Sb compound | | $\chi$ | Addition amount | Number of fins | $S_B/S_A$ | $L_B/D_A$ | $W_B/D_A$ | Spinning property | Accumulation height | Fin separation | | Fabric hand |
|---|---|---|---|---|---|---|---|---|---|---|---|---|---|---|---|---|---|---|
| | | Type | Content mmol% | Type | Content mmol% | Type | Content mmol% | | wt% | | | | | | μm | Surface layer section % | Center section % | |
| Example 24 | PEG | TBT | 5 | TEPA | 30 | - | - | 0.08 | 3.0 | 4 | 1/4 | 1.0 | 1/5 | A | 10 | 63 | 40 | B |
| Example 25 | PEG | TBT | 5 | TEPA | 30 | - | - | 0.08 | 3.0 | 6 | 1/4 | 0.8 | 1/5 | A | 8 | 67 | 46 | A |
| Example 26 | $C_{16}H_{31}$-grafted PEG | TBT | 5 | TEPA | 30 | - | - | 0.25 | 3.0 | 4 | 1/4 | 1.0 | 1/5 | A | 10 | 71 | 52 | A |
| Example 27 | PE(30)-PMMA (70) copolymer | TBT | 5 | TEPA | 30 | - | - | 0.33 | 3.0 | 4 | 1/4 | 1.0 | 1/5 | A | 12 | 77 | 61 | A |
| Example 28 | PE(90)-PMMA (10) copolymer | TBT | 5 | TEPA | 30 | - | - | 1.3 | 3.0 | 4 | 1/4 | 1.0 | 1/5 | A | 11 | 86 | 67 | A |
| Example 29 | PE | TBT | 5 | TEPA | 30 | - | - | 2.2 | 3.0 | 4 | 1/4 | 1.0 | 1/5 | A | 14 | 71 | 52 | B |
| Example 30 | PMMA | TBT | 5 | TEPA | 30 | - | - | 2.3 | 3.0 | 4 | 1/4 | 1.0 | 1/5 | A | 22 | 70 | 53 | B |
| Example 31 | $C_{16}H_{31}$-grafted PEG | TBT | 5 | TEPA | 30 | - | - | 0.25 | 0.3 | 4 | 1/4 | 1.0 | 1/5 | A | 16 | 66 | 43 | B |
| Example 32 | $C_{16}H_{31}$-grafted PEG | TBT | 5 | TEPA | 30 | - | - | 0.25 | 4.0 | 4 | 1/3 | 1.5 | 1/4 | A | 16 | 80 | 59 | A |
| Comp. Ex. 10 | $C_{16}H_{31}$-grafted PEG | - | - | - | - | $Sb_2O_3$ | 31 | 0.25 | 3.0 | 4 | 1/4 | 1.0 | 1/5 | B | 57 | 71 | 52 | A |
| Comp. Ex. 11 | PE | - | - | - | - | $Sb_2O_3$ | 31 | 2.2 | 3.0 | 4 | 1/4 | 1.0 | 1/5 | C | 65 | 73 | 52 | B |

Examples 33, 34

For Example 33, filament yarn A obtained in Example 26 and a 40 dtex/18 filament yarn B obtained by melt discharging polyethylene terephthalate chips from a spinneret provided with 18 sets of flat discharge holes (L/D = 5), winding up at 1500 m/min and then drawing at a preheating temperature of 90°C and a draw ratio of 2.7, were entangled with an interlace nozzle at an air pressure of 1.5 $kg/cm^2$ and an overfeed rate of 1.5%, to produce combined filament yarn.
This combined filament yarn was twisted at S300T/M and used as warp yarn and weft yarn for weaving of a habutae woven fabric. After relaxation treatment, the fabric was heat set and then subjected to 20% alkali reduction treatment. Table 8 shows the shrinkage ratios and combination ratio for filament yarn A and filament yarn B, as well as the fin separation in the woven fabric and the fabric hand.
For Example 34, polyethylene terephthalate chips with an intrinsic viscosity of 0.64 containing titanium oxide at 0.05 wt% as a delustering agent were melt discharged at 275°C from a spinneret provided with 24 sets of discharge holes having the shape shown in Fig. 6B, and cooling was accomplished in a cross-blowing spinning stack while joining the discharged cores and fins, followed by winding up at a speed of 2500 m/min, and after subsequent drawing at a preheating temperature of 90°C and a draw ratio of 1.8, relaxation heat treatment was carried out using a non-contact heater at 150°C with an overfeed rate of 2% to obtain a 60 dtex/24 filament yarn A.
Separately, the polyethylene terephthalate chips were melt discharged from a spinneret having 18 round discharge holes, wound up at 1500 m/min and drawn at a preheating temperature of 90°C and a draw ratio of 3.0 to obtain a 40 dtex/18 filament yarn B.
The filament yarn A and filament yarn B were combined and used for weaving and alkali reduction treatment by the same methods as in Example 33.
Table 8 shows the shrinkage ratios and combination ratio for filament yarn A and filament yarn B obtained in Examples 33 and 34, as well as the fin separation in the resulting woven fabric and the fabric hand.

Table 8

| | Multifilament A | | | Multifilament B | Fin separation | | Fabric hand |
|---|---|---|---|---|---|---|---|
| | Boiling water shrinkage ratio (%) | Dry heat shrinkage ratio (%) | Combination ratio (%) | Boiling water shrinkage ratio (%) | Surface layer section (%) | Center section (%) | |
| Example 33 | 8.3 | 0.6 | 60 | 15.6 | 50 | 35 | B |
| Example 34 | 6.1 | -4.0 | 54 | 16.1 | 56 | 39 | A |

The present invention will now be further explained by Examples 35-40 and Comparative Examples 12-13. The parameters for these examples were measured by the following methods.

(1) Intrinsic viscosity

This was measured at 35°C using orthochlorophenol as the solvent.

(2) Polymer discharge state

The discharge state of the polymer when discharged from the spinneret was observed during spinning, and the discharge state was ranked on the following scale. Observation was from the 1st hour, 3rd day and 7th day after the start of conjugate spinning.

Level 1: Discharged filament drew a consistent falling line with stable running
Level 2: Small bends, kinks or swirls in discharged filament
Level 3: Large bends, kinks or swirls in discharged filament. Partial contact of polymer with spinneret surface, resulting in frequent filament breakage.

(3) Hollowness (%)

The hollow section area (A) of each single fiber cross-section and the area (B) surrounding the cross-section were measured from a micrograph of the polyester fiber cross-sections, and the average value for all of the single fiber lateral cross-sections calculated by the following formula was recorded as the hollowness (%).

$$\text{Hollowness (\%)} = A/B \times 100$$

(4) Size irregularity (U%)

This was measured using a USTER TESTER-4 by Zellweger Uster, with a running speed of 400 m/min.

(5) Fluff count (/$10^6$ m)

Upon placing 250 package-wound (or pirn-wound) polyester fibers through a warping machine equipped with a fluff detector, the yarns were warped and drawn for 42 hours at a speed of 400 m/min. The warping machine was periodically shut down and the presence of fluff visually confirmed, and the total confirmed fluff count was calculated per $10^6$ m of the strand length and recorded as the fluff count.

(6) Dye spots

The polyester fibers were knitted to a 30 cm long tube knit with a 12-gauge circular knitting machine, a dye (Terasil Blue GFL) was used for dyeing at 100°C for 40 minutes, and the level dyeing property was graded on the following scale based on visual examination by an examiner.

Level 1: Uniform dyeing, virtually no dye spots
Level 2: Some striped or spotted dye spots
Level 3: Significant striped or spotted dye spots on one side.

(7) Tenacity and elongation

These were measured according to JIS-L1013.

(8) Hand

The squeaky feel, bulk, flexibility and lightweight feel were ranked on a three-level scale of very good (excellent), good (satisfactory) or poor (unacceptable) by a panel of 5 experts, and the average values were calculated.

Example 35

Preparation of a titanium compound, phosphorus compound and catalyst and production of an oligomer were carried out in the same manner as Example 1.

After transferring 225 parts by mass of the oligomer obtained by esterification reaction to a polycondensation reactor, 3.34 parts by mass of the "TP1-2.0 catalyst" produced earlier was charged in as the polycondensation catalyst. The reaction temperature in the system was then raised from 255°C to 280°C and the reaction pressure was lowered from atmospheric pressure to 60 Pa in stages, for polycondensation reaction while removing out of the system the water and ethylene glycol generated by the reaction, and then 0.6 wt% of a C8-20 (average = C14) sodium alkylsulfonate was added, and after completion of the reaction, the reaction product in the system was continuously extruded from the discharge port into a strand form and cooled and cut to obtain granular pellets approximately 3 mm in size. The intrinsic viscosity of the obtained polyethylene terephthalate was 0.63.

After drying the obtained polyester pellets by an ordinary method, they were introduced into a spinning machine equipped with a melt extruder (screw extruder) and melted, subsequently introduced into a spinning pack placed in a spin block held at 290°C and then melt discharged, and the discharged filament was cooled to solidification, after which a lubricant was applied thereto prior to interlacing and then winding up at a take-up speed of 1400 m/min. The obtained undrawn filament was drawn at a preheating roller temperature of 90°C, a heat setting heater (non-contact type) temperature of 200°C, a draw ratio of 2.3 and a drawing speed of 800 m/min, and finally interlaced to obtain 83 dtex/24

filament polyester modified cross-section fibers with a hollowness of 15%. No accumulation of foreign matter was found around the spinneret discharge holes during spinning, and the polymer discharge state was stable for an extended period.

The obtained filaments were used as warp yarn and weft yarn for weaving of a habutae woven fabric, and then scouring, heat setting, alkali reduction (reduction rate: 15%) and dyeing were carried out by ordinary methods to obtain a plain dyed woven fabric. The evaluation results for the obtained fibers and woven fabric are shown in Table 9.

Comparative Example 12

The same procedure was carried out as in Example 35, except that the polycondensation catalyst was changed to a 1.3% solution of antimony trioxide in ethylene glycol, the charged amount was 4.83 parts by mass, and there was further charged 0.121 part by mass of a 25% solution of trimethyl phosphate in ethylene glycol as a stabilizer, to obtain a polyester with an intrinsic viscosity of 0.63. The polyester was spun and drawn with the same method and conditions as in Example 1 to obtain 83 dtex/24 filament polyester modified cross-section fibers. Growth of accumulated matter was found around the spinneret discharge holes during the course of spinning, while bends, kinks and swirls were also observed in the discharged filaments. A dyed woven fabric was also obtained in the same manner as Example 1. The results for the obtained fibers and fabric are shown in Table 9.

Table 9

| | Example 35 | Comp. Ex. 12 |
|---|---|---|
| Polycondensation catalyst | TP1-2.0 | $Sb_2O_3$ |
| Polymer discharge state (level) | | |
| After 1 hr spinning | 1 | 2 |
| After 3 days spinning | 1 | 3 |
| After 7 days spinning | 1 | 3 |
| Size irregularity (U%) | | |
| After 1 hr spinning | 0.6 | 0.8 |
| After 3 days spinning | 0.5 | 1.2 |
| After 7 days spinning | 0.5 | 1.8 |
| Fluff count (/$10^6$ m) | | |
| After 1 hr spinning | 0.06 | 1.1 |
| After 3 days spinning | 0.07 | 2.5 |
| After 7 days spinning | 0.07 | 3.2 |
| Dye spots (level) | | |
| After 1 hr spinning | 1 | 2 |
| After 3 days spinning | 1 | 3 |
| After 7 days spinning | 1 | 3 |
| Hand | excellent | excellent |
| Tenacity (cN/dtex) | 2.2 | 2.1 |
| Elongation (%) | 33 | 32 |

Examples 36-37

Spinning and drawing were carried out with the same method and conditions as in Example 35, except that the single fiber lateral cross-sectional shapes had the values shown in Table 10, to obtain polyester modified cross-section fibers. Dyed woven fabrics were also obtained in the same manner as Example 35. The hands of the obtained woven fabrics are shown in Table 10.

Comparative Example 13

Spinning and drawing were carried out with the same method and conditions as in Example 35, except that the single fiber lateral cross-sectional shape was a round cross-section, to obtain polyester fibers. A dyed woven fabric was also obtained in the same manner as Example 35. The hand of the obtained woven fabric is shown in Table 10

(absolutely no squeaky feel was exhibited).

Table 10

| | Example 36 | Example 37 | Comp. Ex. 13 |
|---|---|---|---|
| L1/L2 | 2.0 | 0.8 | - |
| h2/h1 | 5.3 | 5.3 | - |
| Hand | excellent | excellent | poor |

Examples 38-40

Spinning and drawing were carried out with the same method and conditions as in Example 35, except that the hollowness values for the fibers were as shown in Table 11, to obtain polyester modified cross-section fibers. Dyed woven fabrics were also obtained in the same manner as Example 35. The results for the obtained fibers and woven fabrics are shown in Table 11.

Table 11

| | Example 38 | Example 39 | Example 40 |
|---|---|---|---|
| Hollowness (%) | 3 | 8 | 13 |
| Polymer discharge state (level) | | | |
| After 1 hr spinning | 1 | 1 | 1 |
| After 3 days spinning | 1 | 1 | 1 |
| After 7 days spinning | 1 | 1 | 1 |
| Size irregularity (U%) | | | |
| After 1 hr spinning | 0.5 | 0.4 | 0.4 |
| After 3 days spinning | 0.5 | 0.3 | 0.4 |
| After 7 days spinning | 0.5 | 0.4 | 0.4 |
| Fluff count (/$10^6$ m) | | | |
| After 1 hr spinning | 0.05 | 0.04 | 0.05 |
| After 3 days spinning | 0.05 | 0.03 | 0.04 |
| After 7 days spinning | 0.04 | 0.04 | 0.05 |
| Dye spots (level) | | | |
| After 1 hr spinning | 1 | 1 | 1 |
| After 3 days spinning | 1 | 1 | 1 |
| After 7 days spinning | 1 | 1 | 1 |
| Hand | excellent | excellent | excellent |
| Tenacity (cN/dtex) | 2.6 | 2.2 | 1.8 |
| Elongation (%) | 39 | 33 | 24 |

## Claims

1. Modified cross-section polyester fibers comprising, as a principal component, a polyester polymer and having a modified cross-section,
wherein
the polyester polymer is produced by polycondensation of an aromatic dicarboxylate ester in the presence of a catalyst,
the catalyst comprises at least one ingredient selected from among mixture (1) and reaction product (2) below,
the mixture (1) is a mixture of the following components (A) and (B):

(A) a titanium compound component comprising at least one compound selected from the group consisting of:

(a) titanium alkoxides represented by the following general formula (I):

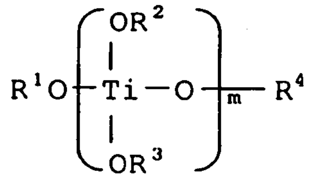

(I)

wherein $R^1$, $R^3$ and $R^4$ each independently represent one species selected from among alkyl groups having 1 to 20 carbon atoms and phenyl groups, m represents an integer of 1-4, and when m is an integer of 2, 3 or 4, the two, three or four $R^2$ and $R^3$ groups may be the same or different, and

(b) reaction products of titanium alkoxides of general formula (I) above with aromatic polyvalent carboxylic acids represented by the following general formula (II):

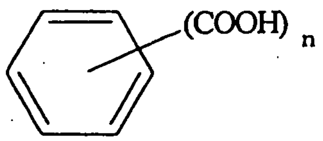

(II)

wherein n represents an integer of 2-4
or their anhydrides, and

(B) a phosphorus compound component comprising at least one compound represented by the following general formula (III):

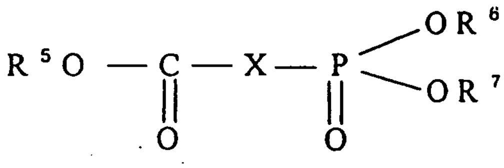

(III)

wherein $R^5$, $R^6$ and $R^7$ each independently represent alkyl groups having 1 to 4 carbon atoms, and X represents at least one species selected from among $-CH_2-$ group and CH(Y)-group, where Y represents phenyl group, the mixture (1) for the catalyst is used with a mixing ratio such that the ratio (%) $M_{Ti}$ of the millimoles of titanium element in the titanium compound component (A) with respect to the number of moles of the aromatic dicarboxylate ester and the ratio (%) Mp of the millimoles of phosphorus element in the phosphorus compound component (B) with respect to the number of moles of the aromatic dicarboxylate ester satisfy the following expressions (i) and (ii):

$$1 \leq M_p/M_{Ti} \leq 15 \qquad (i)$$

$$10 \leq M_p+M_{Ti} \leq 100 \qquad (ii),$$

and the reaction product (2) is the reaction product of the following components (C) and (D):

(C) a titanium compound component comprising at least one compound selected from the group consisting of:

(c) titanium alkoxides represented by formula (I) above and

(d) reaction products of titanium alkoxides of general formula (I) above with aromatic polyvalent carboxylic acids represented by general formula (II) above or their anhydrides, and

(D) a phosphorus compound component comprising at least one phosphorus compound represented by the following general formula (IV):

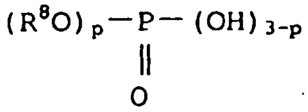

(IV)

wherein $R^8$ represents alkyl groups having 1 to 20 carbon atoms or aryl groups having 6 to 20 carbon atoms, and p represents an integer of 1 or 2.

**2.** The modified cross-section polyester fibers according to claim 1, wherein component (A) of the mixture (1) for the catalyst and component (C) of the reaction product (2) for the catalyst contain the respective titanium alkoxide (a) and titanium alkoxide (c) each in a reaction molar ratio in the range of 2:1 to 2:5 with respect to the aromatic polyvalent carboxylic acid represented by general formula (II) or its anhydride.

**3.** The modified cross-section polyester fibers according to claim 1 or 2, wherein in the reaction product (2) for the catalyst, the reaction ratio of component (D) with respect to component (C) is in the range of 1:1 to 3:1, in terms of the ratio of the moles of phosphorus atoms in component (D) to the moles of titanium atoms in component (C).

**4.** The modified cross-section polyester fibers according to any one of claims 1 to 3, wherein the phosphorus compound of general formula (IV) used in the reaction product (2) for the catalyst is selected from among monoalkyl phosphates.

**5.** The modified cross-section polyester fibers according to any one of claims 1 to 4, wherein the aromatic dicarboxylate ester is a diester produced by transesterification of an aromatic dicarboxylic acid dialkyl ester and an alkylene glycol ester, in the presence of a titanium compound-containing catalyst.

**6.** The modified cross-section polyester fibers according to any one of claims 1 to 5, wherein the aromatic dicarboxylic acid is selected from among terephthalic acid, 1,2-naphthalenedicarboxylic acid, phthalic acid, isophthalic acid, diphenyldicarboxylic acid and diphenoxyethanedicarboxylic acid, and the alkylene glycol is selected from among ethylene glycol, butylene glycol, trimethylene glycol, propylene glycol, neopentyl glycol, hexanemethylene glycol and dodecanemethylene glycol.

**7.** The modified cross-section polyester fibers according to any one of claims 1 to 6, wherein the lateral cross-section of the single fiber is a flat shape, and the flat shape is a form with 3-6 round cross-sectional shapes joined in the lengthwise direction.

**8.** The modified cross-section polyester fibers according to claim 7, which comprises inorganic particles at 0.2-10 wt% based on the fibers weight.

**9.** The modified cross-section polyester fibers according to claim 7 or 8, wherein in the lateral cross-section of the fiber, the flatness represented by A/B as the ratio of the width A of the long axis to the maximum width B of the short axis perpendicular to the long axis B is 3-6.

**10.** The modified cross-section polyester fibers according to any one of claims 7 to 9, wherein in the lateral cross-section of the single fiber, the irregularity represented by B/C as the ratio of the maximum width B of the short axis to the minimum width C (minimum width at the joints of the round cross-sectional shapes) is larger than 1 and smaller than 5.

**11.** The modified cross-section polyester fibers according to any one of claims 1 to 6, wherein the lateral cross-section of the single fiber comprises a core and 3-8 fins protruding outward from the core, and the protrusion coefficient as defined by formula (iii) below is between 0.3 and 0.7.

$$\text{Protrusion coefficient} = (a_1-b_1)/a_1 \qquad \text{(iii)}$$

where $a_1$ represents the length from the center of an inscribed circle in the inner wall of the single fiber cross-section to the tip of the fin, and $b_1$ represents the radius of the inscribed circle in the inner wall of the fiber cross-section.

**12.** The modified cross-section polyester fibers according to claim 11, wherein the fiber crystallinity is no greater than 30%.

**13.** The modified cross-section polyester fibers according to claim 11 or 12, wherein the fiber boiling water shrinkage ratio is 15-70%.

**14.** The modified cross-section polyester fibers according to any one of claims 1 to 6, wherein the polyester single fiber comprises a core and multiple fins protruding in a radial fashion from the core along the lengthwise direction of the core, and the single fibers with cross-sectional shapes satisfying all of the following relationships (iv) to (vi) are subjected to alkali reduction treatment to separate at least some of the fins from the cores.

$$1/20 \leq S_B/S_A \leq 1/3 \qquad (iv)$$

$$0.6 \leq L_B/D_A \leq 3.0 \qquad (v)$$

$$W_B/D_A \leq 1/4 \qquad (vi)$$

where $S_A$ represents the cross-sectional area of the core, $D_A$ represents the core diameter if the cross-section is a circle or the circumscribed circle diameter if it is not a circle, and $S_B$, $L_B$ and $W_B$ represent the cross-sectional area, maximum length and maximum width of the fins, respectively.

**15.** The modified cross-section polyester fibers according to claim 14, wherein a compound having a compatibility parameter $\chi$ represented by relationship (vii) below of 0.1-2.0 is included in the polyester fiber prior to alkali treatment at 0.5-5.0 wt% with respect to the polyester fiber weight.

$$\chi = (V_a/RT)(\delta a - \delta b)^2 \qquad (vii)$$

where $V_a$ represents the molar volume ($cm^3/mol$) of the polyester, R represents the gas constant (J/mol·K), T represents the absolute temperature (K) and $\delta a$ and $\delta b$ represent the solubility parameters ($J^{1/2}/cm^{3/2}$) of the polyester and compound, respectively.

**16.** The modified cross-section polyester fibers according to any one of claims 1 to 6, wherein the lateral cross-section of the single fiber is a shape comprising a triangular shaped section and a protrusion extending from one vertex of the triangular shape, where both of the following relationships (viii) and (ix) are satisfied, and having a·hollow portion in the triangular shaped section constituting 3-15% thereof.

$$0.7 \leq L1/L2 \leq 3.0 \qquad (viii)$$

$$3.0 \leq h2/h1 \leq 10.0 \qquad (ix)$$

where L1 represents the distance from the connection point between the triangular shaped section and the protrusion to the end of the protrusion, L2 represents the distance between the connection point between the triangular shaped section and the protrusion and the side of the triangular shaped section opposite the connection point, h1 represents the width of the protrusion and h2 represents the length of the side of the triangular shaped section opposite the connection point between the triangular shaped section and the protrusion.

**17.** The modified cross-section polyester fibers according to claim 16, wherein an organic sulfonic acid metal salt represented by general formula (V) below is included at 0.5-2.5 wt% with respect to the weight of the polyester fibers.

$R^9SO_3M$ (V)

where $R^9$ represents alkyl group having 3 to 30 carbon atoms or aryl or alkylaryl group having 7 to 40 carbon atoms, and M represents an alkali metal or alkaline earth metal.

**Patentansprüche**

**1.** Polyesterfasern mit modifiziertem Querschnitt, umfassend als Hauptkomponente ein Polyesterpolymer und mit einem modifizierten Querschnitt, worin
das Polyesterpolymer durch Polykondensations eines aromatischen Dicarboxylatesters in der Gegenwart eines Katalysators produziert ist,
der Katalysator zumindest einen Bestandteil enthält, ausgewählt aus der Mischung (1) und dem Reaktionsprodukt (2) wie unten dargestellt,
die Mischung (1) eine Mischung aus den folgenden Komponenten (A) und (B) ist:

(A) eine Titanverbindungskomponente, umfassend zumindest eine Verbindung, ausgewählt aus der Gruppe bestehend aus

(a) Titanalkoxiden mit der folgenden allgemeinen Formel (I) :

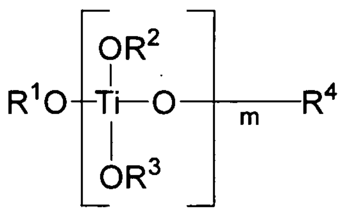

(I)

worin $R^1$, $R^2$, $R^3$ und $R^4$ jeweils unabhängig eine Spezies bedeuten, ausgewählt aus Alkylgruppen mit 1 bis 20 Kohlenstoffatomen und Phenylgruppen, m eine ganze Zahl von 1 bis 4 ist und wenn m eine ganze Zahl von 2, 3 oder 4 ist, können die zwei, drei oder vier Gruppen $R^2$ und $R^3$ gleich oder verschieden sein, und
(b) Reaktionsprodukten von Titanalkoxiden der obigen allgemeinen Formel (I) mit aromatischen polyvalenten Carbonsäuren mit der folgenden allgemeinen Formel (II):

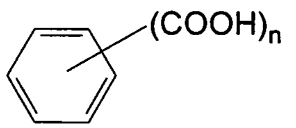

(II)

worin n eine ganze Zahl von 2 bis 4 ist, oder deren Anhydriden, und

(B) eine Phosphorverbindungskomponente, umfassend zumindest eine Verbindung mit der folgenden allgemeinen Formel (III):

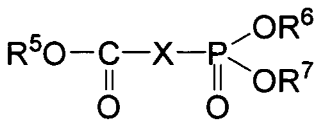

(III)

worin $R^5$, $R^6$ und $R^7$ jeweils unabhängig Alkylgruppen mit 1 bis 4 Kohlenstoffatomen sind und X zumindest eine Spezies ist, ausgewählt aus $-CH_2$-Gruppe und -CH(Y)-Gruppe, worin Y Phenylgruppe ist,

die Mischung (1) für den Katalysator mit einem Mischungsverhältnis verwendet wird, so dass das Verhältnis (%) $M_{Ti}$ der Millimole des Titanelementes in der Titanverbindungskomponente (A) im Hinblick auf die Zahl der Mole des aromatischen Dicarboxylatesters und das Verhältnis (%) Mp der Millimole des Phosphorelementes in der Phosphorverbindungskomponente (B) in Bezug auf die Zahl der Mole des aromatischen Dicarboxylatesters die folgenden Gleichungen (i) und (ii) erfüllen:

$$1 \leq M_P/M_{Ti} \leq 15 \qquad (i)$$

$$10 \leq M_P + M_{Ti} \leq 100 \qquad (ii),$$

und das Reaktionsprodukt (2) das Reaktionsprodukt der folgenden Komponenten (C) und (D) ist:

(C) Titanverbindungskomponente, umfassend zumindest eine Verbindung, ausgewählt aus der Gruppe bestehend aus (c) Titanalkoxiden mit der obigen Formel (I) und (d) Reaktionsprodukten von Titanalkoxiden der obigen allgemeinen Formel (I) mit aromatischen polyvalenten Carbonsäuren mit der obigen allgemeinen Formel (II) oder deren Anhydriden; und

(D) Phosphorverbindungskomponente, umfassend zumindest eine Phosphorverbindung mit der folgenden allgemeinen Formel (IV):

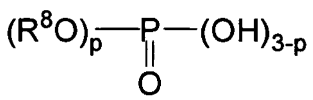

(IV)

worin $R^8$ Alkylgruppen mit 1 bis 20 Kohlenstoffatomen oder Arylgruppen mit 6 bis 20 Kohlenstoffatomen bedeutet und p eine ganze Zahl von 1 oder 2 ist.

2. Polyesterfasern mit modifiziertem Querschnitt nach Anspruch 1, worin die Komponente (A) der Mischung (1) für den Katalysator und die Komponente (C) des Reaktionsproduktes (2) für den Katalysator das Titanalkoxid (a) beziehungsweise Titanalkoxid (c) jeweils in einem molaren Reaktionsverhältnis im Bereich von 2:1 bis 2:5 in Bezug auf die aromatische polyvalente Carbonsäure mit der allgemeinen Formel (II) oder deren Anhydrid umfasst.

3. Polyesterfasern mit modifiziertem Querschnitt nach Anspruch 1 oder 2, worin im Reaktionsprodukt (2) für den Katalysator das Reaktionsverhältnis der Komponente (D) in Bezug auf die Komponente (C) im Bereich von 1:1 bis 3:1 liegt, ausgedrückt als Verhältnis der Mole der Phosphoratome in der Komponente (D) zu den Molen der Titanatome in der Komponente (C).

4. Polyesterfasern mit modifiziertem Querschnitt nach einem der Ansprüche 1 bis 3, worin die Phosphorverbindung der allgemeinen Formel (IV), die im Reaktionsprodukt (2) für den Katalysator verwendet wird, aus Monoalkylphosphaten ausgewählt ist.

5. Polyesterfasern mit modifiziertem Querschnitt nach einem der Ansprüche 1 bis 4, worin der aromatische Dicarboxylatester ein Diester ist, erzeugt durch Umesterung eines aromatischen Dicarbonsäuredialkylesters und eines Alkylenglycolesters in der Gegenwart eines Katalysators mit einer Titanverbindung.

6. Polyesterfasern mit modifiziertem Querschnitt nach einem der Ansprüche 1 bis 5, worin die aromatische Dicarbonsäure ausgewählt ist aus Terephthalsäure, 1,2-Naphthalindicarbonsäure, Phthalsäure, Isophthalsäure, Diphenyldicarbonsäure und Diphenoxyethandicarbonsäure und das Alkylenglycol ausgewählt ist aus Ethylenglycol, Butylenglycol, Trimethylenglycol, Propylenglycol, Neopentylglycol, Hexanmethylenglycol und Dodecanmethylenglycol.

7. Polyesterfasern mit modifiziertem Querschnitt nach einem der Ansprüche 1 bis 6, worin der laterale Querschnitt der Einzelfaser eine flache Form ist und die flache Form eine Form mit 3 bis 6 runden Querschnittsformen ist, die in Längsrichtung verbunden sind.

8. Polyesterfasern mit modifiziertem Querschnitt nach Anspruch 7, umfassend anorganische Teilchen bei 0,2 bis 10

Gew.-%, bezogen auf das Fasergewicht.

**9.** Polyesterfasern mit modifiziertem Querschnitt nach Anspruch 7 oder 8, worin im lateralen Querschnitt der Faser die Flachheit, dargestellt durch A/B, als Verhältnis der Breite A der Längsachse zur maximalen Breite B der kurzen Achse senkrecht zur Längsachse B, 3 bis 6 ist.

**10.** Polyesterfasern mit modifiziertem Querschnitt nach einem der Ansprüche 7 bis 9, worin im lateralen Querschnitt der Einzelfaser die Irregularität, dargestellt durch B/C, als Verhältnis der maximalen Breite B der kurzen Achse zur minimalen Breite C (minimale Breite an den Verbindungen der runden Querschnittsformen) größer als 1 und kleiner als 5 ist.

**11.** Polyesterfasern mit modifiziertem Querschnitt nach einem der Ansprüche 1 bis 6, worin der laterale Querschnitt der Einzelfaser einen Kern und 3 bis 8 Rippen umfasst, die sich vom Kern nach außen erstrecken, und der Vorsprungkoeffizient, definiert durch die Formel (iii) zwischen 0,3 und 0,7 ist:

$$\text{Vorsprungskoeffizient} = (a_1 - b_1)/a_1 \qquad \text{(iii)}$$

worin $a_1$ die Länge von dem Zentrum eines umschreibenden Kreises in der Innenwand des Einzelfaserquerschnittes zur Spitze der Rippe ist und $b_1$ der Radius des eingeschriebenen Kreises in der Innenwand des Faserquerschnitts ist.

**12.** Polyesterfasern mit modifiziertem Querschnitt nach Anspruch 11, worin die Faserkristallinität nicht größer als 30% ist.

**13.** Polyesterfasern mit modifiziertem Querschnitt nach Anspruch 11 oder 12, worin das Faser-Siedewasser-Schrumpfungsverhältnis 15 bis 70% ist.

**14.** Polyesterfasern mit modifiziertem Querschnitt nach einem der Ansprüche 1 bis 6, worin die Polyestereinzelfaser einen Kern und multiple Rippen umfasst, die in einer radialen Weise von dem Kern entlang der Längsrichtung des Kerns vorstehen, und die Einzelfasern mit Querschnittsformen, die alle folgenden Beziehungen (iv) bis (vi) erfüllen, einer Alkali-Reduktionsbehandlung unterworfen sind, zum Trennen von zumindest einigen der Rippen von den Kernen:

$$1/20 \leq S_B/S_A \leq 1/3 \qquad \text{(iv)}$$

$$0{,}6 \leq L_B/D_A \leq 3{,}0 \qquad \text{(v)}$$

$$W_B/D_A \leq 1/4 \qquad \text{(vi)}$$

worin $S_A$ die Querschnittsfläche des Kerns ist, $D_A$ der Kerndurchmesser ist, wenn der Querschnitt ein Kreis ist, oder der umschriebene Kreisdurchmesser ist, wenn er kein Kreis ist, $S_B$, $L_B$ und $W_B$ die Querschnittsfläche, maximale Länge bzw. maximale Breite der Rippen sind.

**15.** Polyesterfasern mit modifiziertem Querschnitt nach Anspruch 14, worin eine Verbindung mit einem Kompatibilitätsparameter $\chi$, dargestellt durch die Beziehung (vii) unten von 0,1 bis 2,0 in der Polyesterfaser vor der Alkalibehandlung bei 0,5 bis 5,0 Gew.-% in Bezug auf das Polyesterfasergewicht enthalten ist,

$$\chi = (V_a/RT)\ (\delta a - \delta b)^2 \qquad \text{(vii)}$$

worin $V_a$ das molare Volumen ($cm^3$/mol) des Polyesters ist, R die Gaskonstante (J/mol·K) ist, T die absolute Temperatur (K) und δa und δb die Löslichkeitsparameter ($J^{1/2}/cm^{3/2}$) des Polyesters beziehungsweise der Verbindung sind.

**16.** Polyesterfasern mit modifiziertem Querschnitt nach einem der Ansprüche 1 bis 6, worin der laterale Querschnitt der Einzelfaser eine Form ist, umfassend einen dreiecksförmigen Bereich und einen Vorsprung, der sich von einer Ecke der Dreiecksform erstreckt, worin beide folgenden Beziehungen (viii) und (ix) erfüllt sind, und mit einem hohlen Bereich in dem dreiecksförmigen Bereich, der 3 bis 15% davon ausmacht:

$$0,7 \leq L1/L2 \leq 3,0 \qquad \text{(viii)}$$

$$3,0 \leq h2/h1 \leq 10,0 \qquad \text{(ix)}$$

worin L1 die Entfernung von dem Verbindungspunkt zwischen dem dreiecksförmigen Bereich und dem Vorsprung zum Ende des Vorsprungs ist, L2 der Abstand zwischen dem Verbindungspunkt zwischen dem dreiecksförmigen Bereich und dem Vorsprung und der Seite des dreiecksförmigen Bereiches gegenüberliegend zum Verbindungspunkt ist, h1 die Breite des Vorsprungs ist und h2 die Länge der Seite des dreiecksförmigen Bereiches gegenüberliegend zum Verbindungspunkt zwischen dem dreiecksförmigen Bereich und dem Vorsprung ist.

**17.** Polyesterfasern mit modifiziertem Querschnitt nach Anspruch 16, worin ein organisches Sulfonsäure-Metallsalz mit der allgemeinen Formel (V) in einer Menge von 0,5 bis 2,5 Gew.-% in Bezug auf das Gewicht der Polyesterfasern enthalten ist:

$$\mathbf{R^9SO_3M} \qquad \text{(V)}$$

worin $R^9$ eine Alkylgruppe mit 3 bis 30 Kohlenstoffatomen oder Aryl- oder Alkylarylgruppe mit 7 bis 40 Kohlenstoffatomen ist und M ein Alkalimetall oder Erdalkalimetall ist.

**Revendications**

**1.** Fibres de polyester de coupe modifiée comprenant, en tant que composant principal, un polymère de polyester et ayant une coupe modifiée,
dans lesquelles
le polymère de polyester est produit par polycondensation d'un ester de dicarboxylate aromatique en présence d'un catalyseur,
le catalyseur comprend au moins un ingrédient choisi parmi le mélange (1) et le produit de réaction (2) ci-dessous,
le mélange (1) est un mélange des composants (A) et (B) suivants :

(A) un composant de composé titane comprenant au moins un composé choisi dans le groupe consistant en :

(a) les alcoxydes de titane représentés par la formule générale (I) suivante :

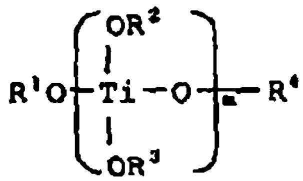

(I)

dans laquelle $R^1$, $R^2$, $R^3$ et $R^4$ représentent chacun indépendamment une espèce choisie parmi les groupes alkyle ayant 1 à 20 atomes de carbone et les groupes phényle, m représente un entier valant 1 à 4, et lorsque m est un entier valant 2, 3 ou 4, les deux, trois ou quatre groupes $R^2$ et $R^3$ peuvent être identiques ou différents, et
(b) les produits de réaction des alcoxydes de titane de formule générale (I) ci-dessus avec des acides carboxyliques polyvalents aromatiques représentés par la formule générale (II) suivante :

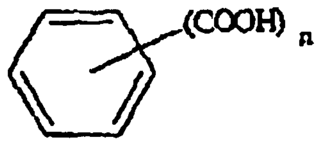

(II)

dans laquelle n représente un entier valant 2 à 4 ou leurs anhydrides, et

(B) un composant de composé phosphore comprenant au moins un composé représenté par la formule générale (III) suivante :

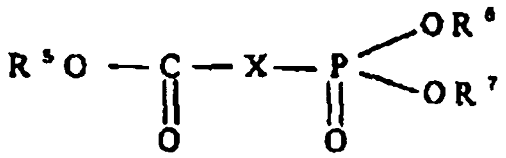

(III)

dans laquelle $R^5$, $R^6$ et $R^7$ représentent chacun indépendamment les groupes alkyle ayant 1 à 4 atomes de carbone, et X représente au moins une espèce choisie parmi le groupe $-CH_2-$ et le groupe -CH(Y)-, où Y représente un groupe phényle,
le mélange (1) pour le catalyseur est utilisé avec un rapport de mélange de sorte que le rapport (%) $M_{Ti}$ des millimoles d'élément titane dans le composant de composé titane (A) par rapport au nombre de moles de l'ester de dicarboxylate aromatique et le rapport (%) Mp des millimoles d'élément phosphore dans le composant de composé phosphore (B) par rapport au nombre de moles de l'ester de dicarboxylate aromatique satisfont les expressions (i) et (ii) suivantes :

$$1 \leq M_P / M_{Ti} \leq 15 \qquad (i)$$

$$10 \leq M_P + M_{Ti} \leq 100 \qquad (ii),$$

et le produit de réaction (2) est le produit de réaction des composants (C) et (D) suivants :
(C) un composant de composé titane comprenant au moins un composé choisi dans le groupe consistant en :

(c) les alcoxydes de titane représentés par la formule (I) ci-dessus et
(d) les produits de réaction des alcoxydes de titane de formule générale (I) ci-dessus avec des acides carboxyliques polyvalents aromatiques représentés par la formule générale (II) ci-dessus ou leurs anhydrides, et

(D) un composant de composé phosphore comprenant au moins un composé phosphore représenté par la formule générale (IV) suivante :

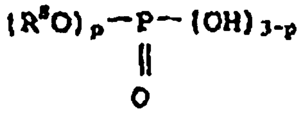

(IV)

dans laquelle $R^8$ représente les groupes alkyle ayant 1 à 20 atomes de carbone ou les groupes aryle ayant 6 à 20 atomes de carbone, et p représente un entier valant 1 ou 2.

**2.** Fibres de polyester de coupe modifiée selon la revendication 1, dans lesquelles le composant (A) du mélange (1) pour le catalyseur et le composant (C) du produit de réaction (2) pour le catalyseur contiennent l'alcoxyde de titane

(a) et l'alcoxyde de titane (c) respectifs chacun dans un rapport molaire de réaction dans la plage de 2 : 1 à 2 : 5 par rapport à l'acide carboxylique polyvalent aromatique représenté par la formule générale (II) ou son anhydride.

3. Fibres de polyester de coupe modifiée selon la revendication 1 ou 2, dans lesquelles dans le produit de réaction (2) pour le catalyseur, le rapport de réaction du composant (D) par rapport au composant (C) se situe dans la plage de 1 : 1 à 3 : 1, en termes du rapport des moles d'atomes de phosphore dans le composant (D) sur les moles d'atomes de titane dans le composant (C).

4. Fibres de polyester de coupe modifiée selon l'une quelconque des revendications 1 à 3, dans lesquelles le composé phosphore de formule générale (IV) utilisé dans le produit de réaction (2) pour le catalyseur est choisi parmi les phosphates de monoalkyle.

5. Fibres de polyester de coupe modifiée selon l'une quelconque des revendications 1 à 4, dans lesquelles l'ester de dicarboxylate aromatique est un diester produit par transestérification d'un ester de dialkyle d'acide dicarboxylique aromatique et d'un ester d'alkylène glycol, en présence d'un catalyseur contenant le composé titane.

6. Fibres de polyester de coupe modifiée selon l'une quelconque des revendications 1 à 5, dans lesquelles l'acide dicarboxylique aromatique est choisi parmi l'acide téréphtalique, l'acide 1,2-naphtalènedicarboxylique, l'acide phtalique, l'acide isophtalique, l'acide diphényldicarboxylique et l'acide diphénoxyéthanedicarboxylique, et l'alkylène glycol est choisi parmi l'éthylène glycol, le butylène glycol, le triméthylène glycol, le propylène glycol, le néopentyl glycol, l'hexaneméthylène glycol et le dodécaneméthylène glycol.

7. Fibres de polyester de coupe modifiée selon l'une quelconque des revendications 1 à 6, dans lesquelles la coupe latérale de la monofibre a une forme plate, et la forme plate est une forme avec 3 à 6 formes de coupe arrondie jointes dans le sens de la longueur.

8. Fibres de polyester de coupe modifiée selon la revendication 7, qui comprennent des particules inorganiques à 0,2 à 10 % en poids sur la base du poids des fibres.

9. Fibres de polyester de coupe modifiée selon la revendication 7 ou 8, dans lesquelles dans la coupe latérale de la fibre, la planéité représentée par A/B comme le rapport de la largeur A de l'axe long sur la largeur maximale B de l'axe court perpendiculaire à l'axe long B est de 3 à 6.

10. Fibres de polyester de coupe modifiée selon l'une quelconque des revendications 7 à 9, dans lesquelles dans la coupe latérale de la monofibre, l'irrégularité représentée par B/C comme le rapport de la largeur maximale B de l'axe court sur la largeur minimale C (largeur minimale au niveau des joints des formes de coupe arrondie) est supérieure à 1 et inférieure à 5.

11. Fibres de polyester de coupe modifiée selon l'une quelconque des revendications 1 à 6, dans lesquelles la coupe latérale de la monofibre comprend un noyau et 3 à 8 ailettes dépassant vers l'extérieur du noyau, et le coefficient de protubérance tel que défini par la formule (iii) ci-dessous est compris entre 0,3 et 0,7.

$$\text{Coefficient de protubérance} = (a_1 - b_1)/a_1 \qquad \text{(iii)}$$

où $a_1$ représente la longueur du centre d'un cercle inscrit dans la paroi interne de la coupe de monofibre à l'extrémité de l'ailette, et $b_1$ représente le rayon du cercle inscrit dans la paroi interne de la coupe de fibre.

12. Fibres de polyester de coupe modifiée selon la revendication 11, dans lesquelles la cristallinité de fibre n'est pas supérieure à 30 %.

13. Fibres de polyester de coupe modifiée selon la revendication 11 ou 12, dans lesquelles le taux de rétrécissement à l'ébullition de fibre est de 15 à 70 %.

14. Fibres de polyester de coupe modifiée selon l'une quelconque des revendications 1 à 6, dans lesquelles la monofibre de polyester comprend un noyau et de multiples ailettes dépassant de manière radiale du noyau dans le sens de la longueur du noyau, et les monofibres ayant des formes de coupe satisfaisant la totalité des relations (iv) à (vi)

suivantes sont soumises à un traitement de réduction alcaline pour séparer au moins certaines des ailettes des noyaux.

$$1/20 \leq S_B/S_A \leq 1/3 \qquad (iv)$$

$$0,6 \leq L_B/D_A \leq 3,0 \qquad (v)$$

$$W_{B/}D_A \leq 1/4 \qquad (vi)$$

où $S_A$ représente l'aire en coupe du noyau, $D_A$ représente le diamètre de noyau si la coupe est un cercle ou le diamètre de cercle circonscrit s'il ne s'agit pas d'un cercle, et $S_B$, $L_B$ et $W_B$ représentent l'aire en coupe, la longueur maximale et la largeur maximale des ailettes, respectivement.

**15.** Fibres de polyester de coupe modifiée selon la revendication 14, dans lesquelles un composé ayant un paramètre de compatibilité $\chi$ représenté par la relation (vii) ci-dessous de 0,1 à 2,0 est inclus dans la fibre de polyester avant le traitement alcalin à 0,5 à 5,0 % en poids par rapport au poids de la fibre de polyester.

$$\chi = (V_a/RT)(\delta a\text{-}\delta b)^2 \qquad (vii)$$

où $V_a$ représente le volume molaire ($cm^3$/mol) du polyester, R représente la constante des gaz (J/mol.K), T représente la température absolue (K) et δa et δb représentent les paramètres de solubilité ($J^{1/2}/cm^{3/2}$) du polyester et du composé, respectivement.

**16.** Fibres de polyester de coupe modifiée selon l'une quelconque des revendications 1 à 6, dans lesquelles la coupe latérale de la monofibre a une forme comprenant une section triangulaire et une protubérance s'étendant depuis un sommet de la forme triangulaire, où les deux relations (viii) et (ix) suivantes sont satisfaites, et ayant une partie creuse dans la section triangulaire constituant 3 à 15 % de celle-ci.

$$0,7 \leq L1/L2 \leq 3,0 \qquad (viii)$$

$$3,0 \leq h2/h1 \leq 10,0 \qquad (ix)$$

où L1 représente la distance du point de connexion entre la section triangulaire et la protubérance à l'extrémité de la protubérance, L2 représente la distance entre le point de connexion entre la section triangulaire et la protubérance et le côté de la section triangulaire à l'opposé du point de connexion, h1 représente la largeur de la protubérance et h2 représente la longueur du côté de la section triangulaire à l'opposé du point de connexion entre la section triangulaire et la protubérance.

**17.** Fibres de polyester de coupe modifiée selon la revendication 16, dans lesquelles un sel de métal d'acide sulfonique organique représenté par la formule générale (V) ci-dessous est inclus à 0,5 à 2,5 % en poids par rapport au poids des fibres de polyester.

$$R^9SO_3M \qquad (V)$$

où $R^9$ représente un groupe alkyle ayant 3 à 30 atomes de carbone ou un groupe aryle ou alkylaryle ayant 7 à 40 atomes de carbone, et M représente un métal alcalin ou un métal alcalino-terreux.

Fig. 1

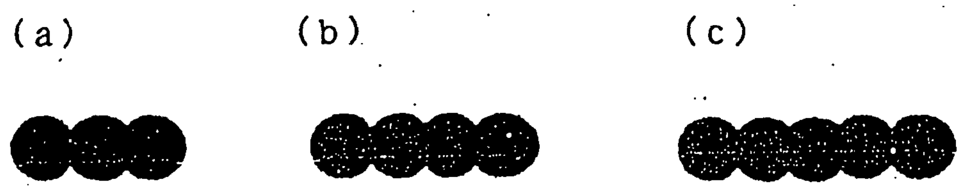


Fig. 2

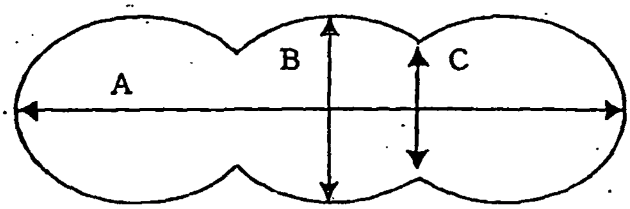

Fig. 3

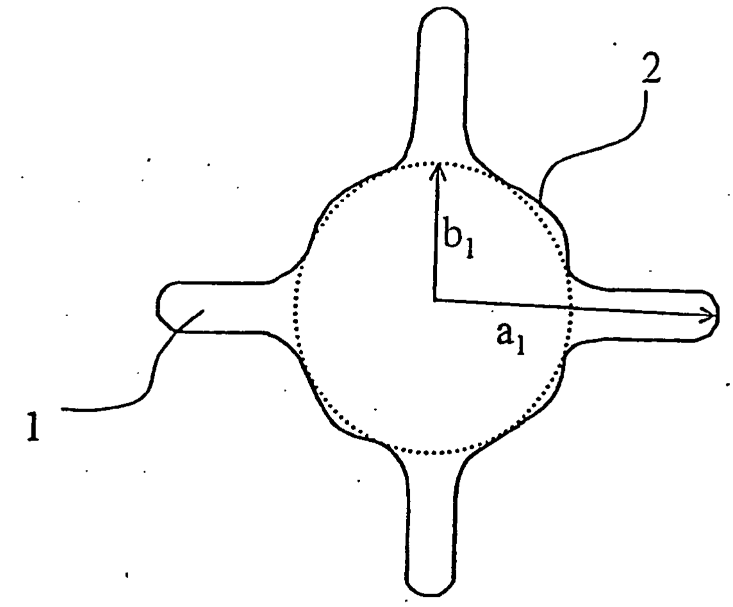


Fig. 4

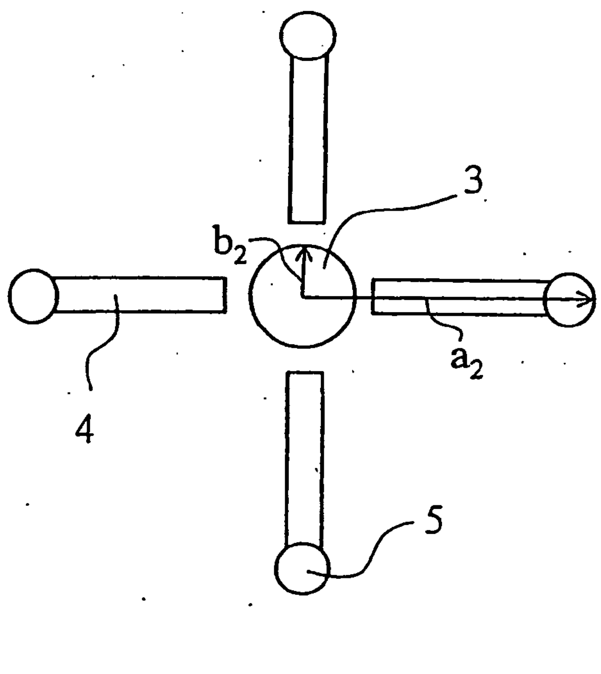

Fig. 5

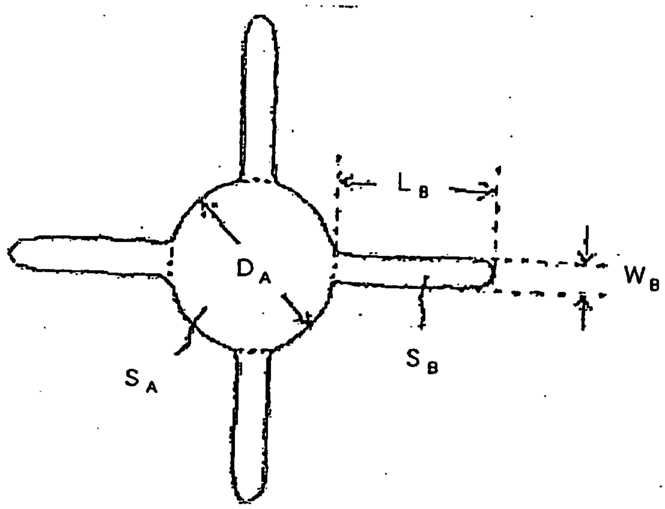


Fig. 6

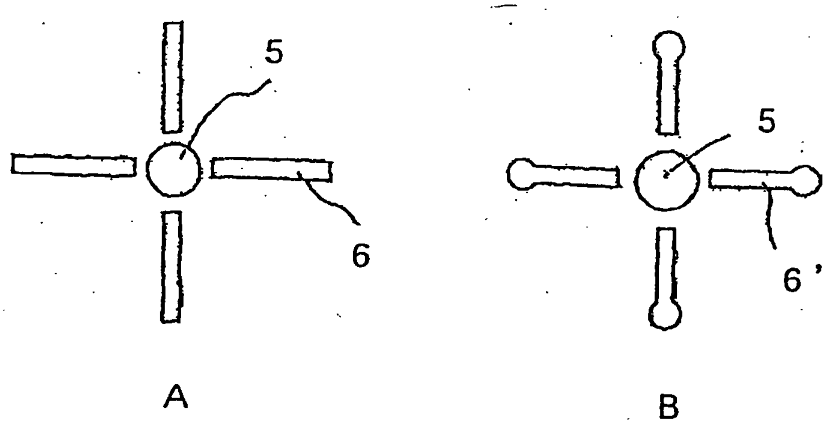


Fig. 7

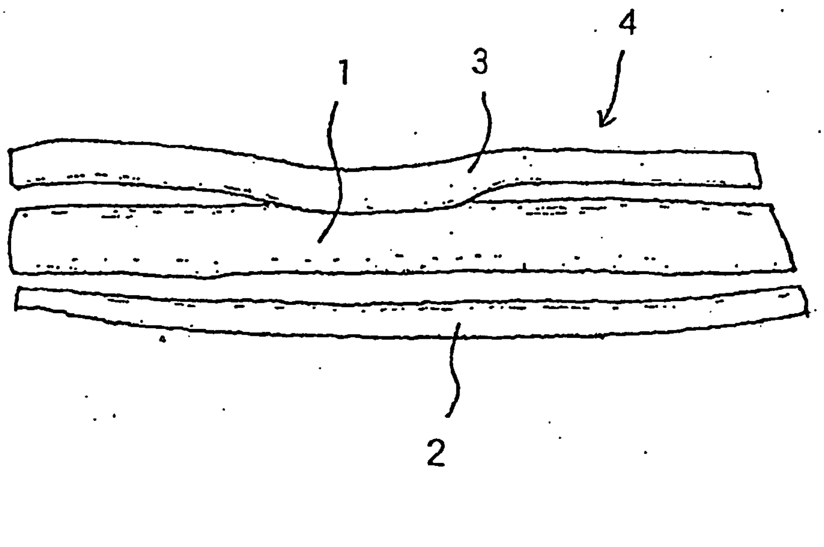

Fig. 8

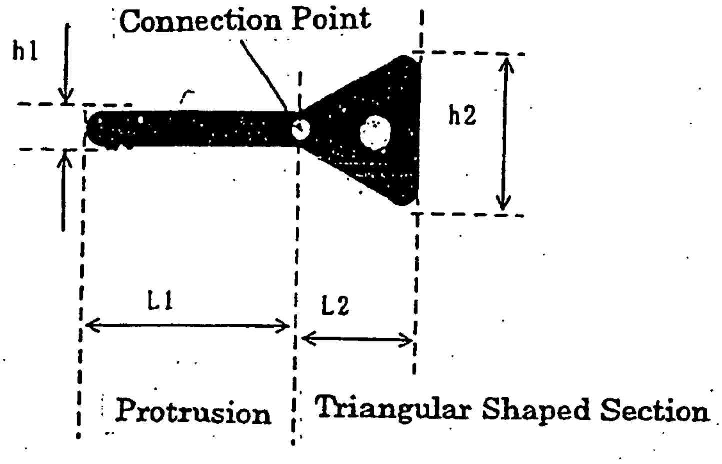
Connection Point
h1
h2
L1
L2
Protrusion
Triangular Shaped Section

Fig. 9

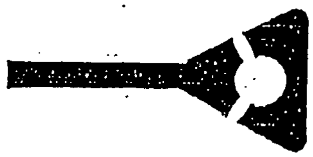

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 59046258 A
- JP 58038722 A
- JP 7138354 A
- JP 3076372 B